# EUROPÄISCHE PATENTSCHRIFT

(11) **EP 2 282 201 B1**
(45) Veröffentlichungstag und Bekanntmachung des Hinweises auf die Patenterteilung: **11.09.2019**
(21) Anmeldenummer: 10171445.9
(22) Anmeldetag: 30.07.2010
(51) Int. Cl.: G01N 29/04, G01N 29/24, G01N 29/28

(54) **Verfahren zur Messung der Beschaffenheit einer Oberfläche eines Körpers und Vorrichtung zur Messung der Beschaffenheit einer Oberfläche eines Körpers**
Method for measuring the properties of a surface of a body and device for measuring the properties of a surface of a body
Procédé de mesure des propriétés d'une surface d'un corps et dispositif de mesure des propriétés d'une surface d'un corps

(30) Priorität: 30.07.2009 DE 102009036001
(43) Veröffentlichungstag der Anmeldung: 09.02.2011
(73) Patentinhaber: SensAction AG, 96450 Coburg (DE)
(72) Erfinder: Braun, Rudolf, 96450 Coburg (DE); Münch, Michael, 96450 Coburg (DE); Faustmann, Hendrik, 96450 Coburg (DE)
(74) Vertreter: Maikowski & Ninnemann Patentanwälte Partnerschaft mbB

(56) Entgegenhaltungen:
- WO-A2-2008/034878
- WO-A2-2010/034715
- KHURI-YAKUB B T ET AL: "A HIGH FREQUENCY TECHNIQUE FOR SURFACE FLAW DETECTION IN CERAMICS" PROCEEDINGS OF THE ULTRASONICS SYMPOSIUM. PHOENIX, OCTOBER 26 - 28, 1977; [PROCEEDINGS OF THE ULTRASONICS SYMPOSIUM], NEW YORK, IEEE, US, Bd. -, 26. Oktober 1977 (1977-10-26), Seiten 53-55, XP001159029

## Beschreibung

Die Erfindung betrifft ein Verfahren zur Messung der Beschaffenheit einer Oberfläche eines Körpers und eine Vorrichtung zur Messung der Beschaffenheit einer Oberfläche eines Körpers.

Es ist bekannt, die Beschaffenheit der Oberfläche eines Körpers mittels sensorischer Verfahren zu messen. Hierbei wird im Allgemeinen die Oberfläche des Körpers einer physikalischen Wechselwirkung ausgesetzt. Eine solche Wechselwirkung kann beispielsweise in der Bestrahlung der Oberfläche des Körpers mit Licht bestehen. Bei einem solchen Verfahren wird die Oberfläche des Körpers mit Licht bestrahlt und das von der Oberfläche des Körpers reflektierte bzw. emittierte Licht zur Messung der Beschaffenheit der Oberfläche des Körpers herangezogen. Hierbei kann vorgesehen sein, dass das von der Oberfläche des Körpers emittierte bzw. reflektierte Licht von einem Sensor aufgenommen wird, der ein Signal erzeugt, aus dem Eigenschaften des zu messenden Körpers ermittelt werden, die die Beschaffenheit der Oberfläche des Körpers repräsentieren.

Ist eine Oberfläche eines Körpers, deren Beschaffenheit gemessen werden soll, z. B. aufgrund der Einbettung des Körpers in ein Medium, einer unmittelbaren Bestrahlung durch Licht ohne vorherige Wechselwirkung des Lichtes mit dem Medium nicht zugänglich, so kann die Anwendung eines solchen optischen Verfahrens zur Messung der Beschaffenheit einer Oberfläche erschwert sein und zu verfälschten Ergebnissen bezüglich der Beschaffenheit der Oberfläche des Körpers führen.

Eine alternative Möglichkeit zur Bestimmung der Oberflächenbeschaffenheit eines Körpers ist das Abtasten des Körpers mittels eines Abtastmittels z. B. eines taktilen Sensors in Form eines Greifers. Die Anwendbarkeit und Zuverlässigkeit dieses Verfahrens kann durch das Vorhandensein eines den Körper umgebenden Mediums eingeschränkt sein. Darüber hinaus muss der taktile Sensor über die Oberfläche geführt werden und mit dieser in Kontakt sein, um deren Beschaffenheit zu ermitteln. Nachteilig hierbei ist, dass die Oberfläche kontaktiert werden muss. Insbesondere kann es hierbei zu unerwünschten Materialveränderungen durch die Wechselwirkung des Abtastmittels mit dem Körper kommen.

In dem Dokument KHURI-YAKUB et al.: "A HIGH FREQUENZY TECHNIQUE FOR SURFACE FLOW DETECTION IN CERAMICS" PROCEEDINGS OF THE ULTRASONICS SYMPOSIUM. PHOENIX, OCTOBER 26 - 28, 1977; NEW YORK, IEEE, US, Seiten 53-55, XP001159029 ist eine Vorrichtung beschrieben, die einen Sender und einen Empfänger umfasst, die jeweils über eine Kopplungsflüssigkeit mit einem keramischen Substrat gekoppelt sind. Über den Sender werden akustische Wellen in das keramische Substrat eingekoppelt und mittels des Empfängers empfangen. Hierbei zeigen sich zum Beispiel Defekte in der Oberfläche des Keramiksubstrats im Signal des Empfängers.

Der Erfindung liegt die Aufgabe zugrunde, ein Verfahren bereitzustellen, das zur Bestimmung der Beschaffenheit der Oberfläche eines Körpers nicht auf die Emission oder Reflexion von Licht an der Oberfläche dieses Körpers oder auf das Abtasten der Oberfläche des Körpers angewiesen ist, sowie eine Vorrichtung zur Durchführung eines solchen Verfahrens bereitzustellen.

Diese Aufgabe wird mit dem Verfahren des Anspruchs 1 und mit der Vorrichtung des Anspruchs 15 gelöst. Ausgestaltungen der Erfindung sind in den Unteransprüchen angegeben.

So ist beim erfindungsgemäßen Verfahren zur Messung der Beschaffenheit einer Oberfläche eines Körpers vorgesehen, dass ein Substrat mit einer einem Medium zugewandten inneren Oberfläche bereitgestellt wird und dass auf dem Substrat durch Einspeisung akustischer Wellenenergie in das Substrat mittels eines Senders akustische Oberflächenwellen angeregt werden, wobei zumindest ein Teil der Energie der akustischen Oberflächenwellen dieses Substrats in akustische Volumenwellen des Mediums umgewandelt wird. Es breiten sich dann sowohl die akustischen Oberflächenwellen auf dem Substrat als auch die akustischen Volumenwellen im Medium aus. Hierbei steht ein zu messender Körper so mit dem Medium in Kontakt, dass zumindest ein Teil der sich im Medium ausbreitenden akustischen Volumenwellen mit der Oberfläche des Körpers wechselwirkt. Es werden bei dem Verfahren akustische Oberflächenwellen auf dem Substrat durch Umwandlung zumindest eines Teils der Energie der akustischen Volumenwellen in akustische Energie des Substrats angeregt. Es werden akustische Oberflächenwellen mit einem hierzu eingerichteten Empfänger empfangen, wobei Eigenschaften des zu messenden Körpers aus beim Empfang der akustischen Oberflächenwellen erzeugten Signalen ermittelt werden, die die Beschaffenheit der Oberfläche des Körpers repräsentieren.

Dabei wird der Abstand zwischen einer dem Medium zugewandten inneren Oberfläche des Substrats und dem Schwerpunkt des Körpers geändert, wobei aus Unterschieden oder Gemeinsamkeiten der so erzeugten Signale Eigenschaften des Körpers ermittelt werden.

Unter den genannten Eigenschaften des zu messenden Körpers, die die Beschaffenheit der Oberfläche des Körpers repräsentieren, sind ausschließlich solche Eigenschaften zu verstehen, die die Beschaffenheit des Körpers selbst darstellen. Eigenschaften, die beispielsweise die relative Lage des Körpers zu anderen Körpern kennzeichnen, fallen nicht unter diejenigen Eigenschaften, die die Beschaffenheit der Oberfläche des Körpers repräsentieren.

Dies schließt nicht aus, dass solche Eigenschaften wie z. B. die relative Lage des zu messenden Körpers relativ zu anderen Körpern zur Bestimmung der Eigenschaften des zu messenden Körpers, die die Beschaffenheit der Oberfläche des Körpers repräsentieren, herangezogen werden können.

Die Ermittelung von Eigenschaften des Körpers durch das erfindungsgemäße Verfahren beruht insbesondere einerseits darauf, dass durch den Sender direkt akustische Oberflächenwellen angeregt werden, die beim Empfang durch einen hierzu eingerichteten Empfänger Signale erzeugen als auch, dass andererseits mittels eines Teils der Energie der akustischen Oberflächenwellen akustische Volumenwellen angeregt werden, die sich im Medium ausbreiten. Zumindest ein Teil der akustischen Volumenwellen wechselwirkt mit der Oberfläche des Körpers. Es wechselwirken dabei akustische Volumenwellen mit dem Substrat, sodass akustische Oberflächenwellen auf dem Substrat durch Umwandlung zumindest eines Teils der Energie dieser Volumenwellen angeregt werden. Hierbei stammt ein Teil der Energie zur Anregung dieser akustischen Oberflächenwellen von akustischen Volumenwellen, die mit dem Körper wechselgewirkt haben oder von akustischen Volumenwellen, die nicht mit dem Körper wechselgewirkt haben.

In einem Ausführungsbeispiel stammt der überwiegende Teil der Energie einer bestimmten angeregten Oberflächenwelle von akustischen Volumenwellen, die am Körper reflektiert wurden, der überwiegende Teil einer anderen angeregten Oberflächenwelle von akustischen Volumenwellen, die nicht am Körper, sondern beispielsweise an einer Gefäßwand reflektiert wurden. Bei dem Verfahren werden also zusätzlich zur unmittelbaren Anregung von akustischen Oberflächenwellen durch den Sender, akustische Oberflächenwellen mittelbar durch Umwandlung von Energie akustischen Volumenwellen, die sich durch das Medium ausgebreitet haben, angeregt. Die Eigenschaften der mittelbar angeregten akustischen Oberflächenwellen sind davon abhängig, durch die Wechselwirkung welcher akustischen Volumenwellen mit dem Substrat sie angeregt wurden. Insbesondere sind sie davon abhängig, ob und wie die Volumenwellen zuvor mit dem Körper wechselgewirkt haben. Mittelbar und unmittelbar angeregte akustische Oberflächenwellen werden von einem hierzu eingerichteten Empfänger empfangen und hierbei werden Signale erzeugt. Aus diesen Signalen werden, z. B. durch Vergleich der Gemeinsamkeiten und Unterschiede der Signale untereinander, Eigenschaften des Körpers ermittelt, die die Beschaffenheit der Oberfläche des Körpers repräsentieren.

Das erfindungsgemäße Verfahren erlaubt eine Messung der Beschaffenheit einer Oberfläche des Körpers, ohne dass vom Körper emittiertes oder reflektiertes Licht gemessen werden müsste, um hieraus die Eigenschaften des Körpers zu ermitteln, die die Beschaffenheit einer Oberfläche des Körpers repräsentieren. Vielmehr beruht das erfindungsgemäße Verfahren auf der Erkenntnis, dass auch allein über eine akustische Wechselwirkung des Körpers mit seiner Umgebung eine Messung der Beschaffenheit einer Oberfläche des Körpers erfolgen kann, wenn die erfindungsgemäßen Verfahrensschritte durchgeführt werden.

Eine Ausführungsvariante des Verfahrens zeichnet sich dadurch aus, dass die Wechselwirkung des Körpers mit den im Medium sich ausbreitenden akustischen Volumenwellen in einer zumindest teilweisen Reflexion der Volumenwellen an der Oberfläche des Körpers und/oder in einer Absorption von akustischer Energie der Volumenwelle durch den Körper und/oder in einer Umwandlung zumindest eines Teils der Energie der akustischen Volumenwelle in akustische Energie des Körpers, wobei bei dieser Umwandlung wenigstens eine akustische Oberflächenwelle auf der Oberfläche des Körpers angeregt wird, besteht.

Durch eine solche Wechselwirkung wird eine auf den Körper auftreffende Volumenwelle verändert. D. h., dass die Volumenwelle, nachdem sie auf den Körper aufgetroffen ist, sich mit veränderten Eigenschaften weiter durch das Medium ausbreitet. Zu den geänderten Eigenschaften der Volumenwelle können beispielsweise die in der Volumenwelle gespeicherte Energie, die Hauptausbreitungsrichtung der Volumenwelle, die Geschwindigkeit der Ausbreitung der Volumenwelle, die Wellenform der Volumenwelle und/oder die Amplitude der Volumenwelle gehören.

Aufgrund der Wechselwirkung des Körpers mit den im Medium sich ausbreitenden akustischen Volumenwellen werden, da die akustischen Volumenwellen erfindungsgemäß zumindest einen Teil der in ihnen gespeicherten Energie in akustischer Energie des Substrates, in dem dabei akustische Oberflächenwellen angeregt werden, umwandeln, aus einem von einem zum Empfang akustischer Oberflächenwellen eingerichteten Empfänger beim Empfang akustischer Oberflächenwellen des Substrats erzeugten Signal Eigenschaften des zu messenden Körpers ermittelt, die die Beschaffenheit der Oberfläche des Körpers repräsentieren.

In einer Ausführungsvariante wechselwirken bei dem Verfahren sich im Medium ausbreitende akustische Volumenwellen an mehreren zueinander beabstandeten Bereichen der Oberfläche des Körpers entlang ihres Ausbreitungsweges durch das Medium mit der Oberfläche des Körpers während unterschiedlicher Zeitspannen. So trifft eine bestimmte Volumenwelle in der besagten Ausführungsvariante auf einen ersten Bereich der Oberfläche des Körpers auf, an dem sie mit dem Körper wechselwirkt und sich nach dieser Wechselwirkung weiter durch das Medium ausbreitet. Bei der späteren Ausbreitung durch das Medium wechselwirkt die besagte Volumenwelle wenigstens ein zweites Mal in einem zum ersten Bereich beabstandeten Bereich der Oberfläche des Körpers mit dem Körper und wird dabei unter Umständen ein zweites Mal in ihre Eigenschaften verändert. In einer Ausführungsvariante trifft eine solche Volumenwelle bei ihrer weiteren Ausbreitung durch das Medium auf das Substrat. Dabei wird ein Teil der in der Volumenwelle gespeicherten Energie in akustische Energie des Substrates umgewandelt, in dem dabei akustische Oberflächenwellen angeregt werden. Diese akustischen Oberflächenwellen führen beim Eintreffen auf den Empfänger zur Erzeugung eines Signals, aus dem Eigenschaften des zu messenden Körpers ermittelt werden, die die Beschaffenheit einer Oberfläche des Körpers repräsentieren.

Der Empfänger kann damit akustische Oberflächenwellen, die sich auf einem Substrat ausbreiten, empfangen, wobei die Oberflächenwellen zum einen direkt auf dem Substrat durch Einspeisung akustischer Wellenenergie in das Substrat mittels des Senders angeregt wurden und zum anderen durch Umwandlung zumindest eines Teils der Energie akustischer Volumenwellen in akustische Energie des Substrats angeregt worden sind. Es ist auch möglich, dass die Oberflächenwellen eine Überlagerung von direkt durch den Sender angeregten akustischen Oberflächenwellen und durch Umwandlung eines Teils der Energie akustischer Volumenwellen angeregten akustischen Oberflächenwellen ist.

Die Erfindung beruht damit auf der Erkenntnis, dass beim Empfang dieser Oberflächenwellen Signale erzeugt werden können, die Informationen über die Beschaffenheit der Oberfläche des Körpers tragen, da im Allgemeinen zumindest ein Teil der empfangenen Oberflächenwellen durch Umwandlung eines Teils der Energie akustischer Volumenwellen angeregt wurde, die zuvor mit der Oberfläche des Körpers wechselwirkten und dass mittels Auswertung dieser beim Empfang erzeugten Signale Eigenschaften des zu messenden Körpers ermittelbar sind, die die Beschaffenheit der Oberfläche des Körpers repräsentieren.

Bei dieser Ermittelung können in Ausführungsvarianten des Verfahrens optionale, weitere Informationen hinzugezogen werden z. B. Informationen über die Dauer und Stärke sowie das Anregungsprofil bei direkter Anregung durch den Sender erzeugter Oberflächenwellen.

Es ist in einer Ausführungsvariante vorgesehen, dass mehrere im Medium gleichzeitig und/oder nacheinander sich ausbreitende akustische Volumenwellen an jeweils zueinander beabstandeten Bereichen der Oberfläche des Körpers mit diesem wechselwirken. Insbesondere können diese gleichzeitig und/oder zeitlich nacheinander sich ausbreitenden akustischen Volumenwellen mit dem Substrat nach ihrer Wechselwirkung mit dem Körper dergestalt wechselwirken, dass sie im Substrat Oberflächenwellen anregen, die von wenigstens einem Empfänger nacheinander und/oder gleichzeitig empfangen werden, wobei ein oder mehrere Signale erzeugt werden, die zur Ermittlung von Eigenschaften des zu messenden Körpers, die die Beschaffenheit einer Oberfläche des Körpers repräsentieren, herangezogen werden.

Bei der Durchführung des Verfahrens kann vorgesehen sein, dass der Körper und das Substrat so angeordnet sind, dass die Oberfläche des Körpers und die innere Oberfläche des Substrats einen Zwischenraum bilden, der zumindest teilweise mit dem Medium gefüllt ist.

Zur Bestimmung der Beschaffenheit einer Oberfläche des Körpers kann vorgesehen sein, dass bei dem Verfahren mehrfache, zeitlich beabstandete Anregungen mittels des Senders erfolgen, wobei zwischen diesen Anregungen die relative Position des Körpers zum Substrat definiert verändert wird. Eine solche definierte Veränderung der Position des Körpers relativ zum Substrat besteht in der Veränderung des Schwerpunktes des Körpers relativ zum Substrat. Zusätzlich kann eine Drehung des Körpers um eine relativ zum Substrat ortsfeste Achse und/oder eine Drehung des Substrats um eine relativ zum Körper ortsfeste Achse erfolgen. Hierbei ist in einer Ausführungsvariante vorgesehen, dass wenigstens ein vom Empfänger beim Empfang akustischer Oberflächenwellen des Substrats erzeugtes Signal vor der Positionsänderung und ein vom Empfänger beim Empfang akustischer Oberflächenwellen des Substrats nach der Positionsänderung erzeugtes Signal zugrunde gelegt werden, um Eigenschaften des zu messenden Körpers zu ermitteln, die die Beschaffenheit einer Oberfläche des Körpers repräsentieren.

In einem Ausführungsbeispiel werden während einer Positionsänderung der relativen Position des Substrats zum Körper von dem Empfänger oder den Empfängern beim Empfang akustischer Oberflächenwellen erzeugte Signale zugrunde gelegt, um Eigenschaften des zu messenden Körper zu ermitteln, die die Beschaffenheit des Körpers repräsentieren. In einem Beispiel ist vorgesehen, dass mittels eines Bewegungsmittels die relative Position des Substrats zum Körper so geändert wird, dass das Substrat über zumindest einen Teil der Oberfläche des Körpers gefahren wird. Hierbei ist in einer Ausgestaltung vorgesehen, dass das Substrat nicht die Oberfläche des Körpers berührt.

Die beim Empfang akustischer Oberflächenwellen erzeugten Signale werden bei der Ermittelung besagter Eigenschaften des zu messenden Körpers zusätzlich herangezogen. So kann erreicht werden, dass Eigenschaften weiterer Bereiche der Oberfläche des Körpers, die die Beschaffenheit der Oberfläche des Körpers charakterisieren, ermittelt werden, als wenn die Position des Substrats relativ zum Körper unverändert bleibt.

In einer Ausführungsform des Verfahrens erfolgt ein Anregen akustischer Oberflächenwellen auf dem Substrat durch Einspeisung akustischer Wellenenergie in das Substrat mittels mehrerer Sender. Bei einer Ausgestaltungsvariante erfolgt der Empfang der akustischen Oberflächenwellen mit mehreren Empfängern. Dabei können die Positionen der Empfänger bzw. der Sender auf dem Substrat zueinander durch ein festes vorgegebenes Positionsmuster festgelegt sein. In einer Ausgestaltung der Erfindung ist vorgesehen, dass wenigstens einer der Sender und/oder wenigstens einer der Empfänger beweglich auf dem Substrat angeordnet ist. Damit ist eine Veränderung der Position des beweglich angeordneten Senders bzw. Empfängers relativ zu den anderen Sendern bzw. Empfängern möglich. Eine solche Positionsveränderung kann auch während einer Messung der Beschaffenheit einer Oberfläche des Körpers erfolgen. Dabei können zur Ermittelung von Eigenschaften des zu messenden Körpers, die Beschaffenheit des Körpers repräsentieren, während einer Positionsänderung der Position des Senders oder des Empfängers beim Empfang akustischer Oberflächenwellen erzeugte Signale zugrunde gelegt.

In einer Ausführungsvariante ist vorgesehen, dass der Sender akustische Wellenenergie in das Medium und/oder das Substrat in Form von Energiepulsen einspeist, sodass Wellenpulse sich im Substrat und/oder im Medium ausbreiten. Bei den sich im Substrat ausbreitenden Wellenpulsen handelt es sich um Oberflächenwellenpulse, wohingegen es sich bei den im Medium sich ausbreitenden Wellenpulsen um Volumenwellenpulse handelt.

Eine Messung der Beschaffenheit einer Oberfläche des Körpers kann in einer Ausführungsvariante dadurch erfolgen, dass die zeitliche Verzögerung durch die Ausbreitung der Wellenpulse zwischen dem Sender und dem Empfänger gemessen wird und/oder dass Eigenschaften der Form der am Empfänger eintreffenden Wellenpulse gemessen werden, um die Beschaffenheit einer Oberfläche des Körpers zu messen. Die Eigenschaften der Form eines Wellenpulses umfassen insbesondere die Amplitude des Wellenpulses als Funktion der Zeit.

Die so ermittelten Informationen über die Eigenschaften der Beschaffenheit einer Oberfläche des Körpers können in einem Ausführungsbeispiel dadurch ergänzt werden, dass die Verzögerung durch die Ausbreitung der Wellenpulse zwischen dem Sender und dem Empfänger und/oder Eigenschaften der Form der Wellenpulse der am Empfänger eintreffenden Wellenpulse für Wellen gemessen wird, die sich entlang unterschiedlicher Pfade durch das Medium zum Empfänger ausgebreitet haben.

Es ist bei der Durchführung des Verfahrens in einem Ausführungsbeispiel vorgesehen, dass mehrere zeitlich beabstandete Anregungen mittels wenigstens eines Senders erfolgen, wobei zwischen mindestens zweien dieser Anregungen die Eigenschaften des Mediums definiert verändert werden. Alternativ können die Eigenschaften des Mediums auch während Anregungen mittels wenigstens eines Senders verändert werden, in diesem Fall werden zur Ermittelung der Eigenschaften einer Oberfläche des Körpers Informationen über die Veränderung der Eigenschaften des Mediums bei der Auswertung der beim Empfang von Oberflächenwellen am Empfänger erzeugter Signale mit herangezogen.

Es ist in einer Variante vorgesehen, dass die Veränderung der Eigenschaften des Mediums in einem zumindest teilweisen Austausch des Mediums durch ein anderes Medium bestehen und/oder in einer Änderung eines physikalischen Parameters des Mediums besteht. Unter einem teilweisen Austausch des Mediums ist hierbei nicht nur das physikalische Austauschen des das Medium darstellenden Stoffes zu verstehen, sondern auch die Veränderung der chemischen Zusammensetzung und/oder des Mischungsverhältnisses des Mediums. So kann dem Medium z. B. bei diesem "Austausch" auch ein zusätzlicher Stoff zugegeben werden. Unter der Änderung eines physikalischen Parameters des Mediums ist beispielsweise zu verstehen, dass die lokale Temperaturverteilung im Medium und/oder die im Medium lokal herrschende Druckverteilung geändert werden. Informationen über die Beschaffenheit einer Oberfläche des Körpers werden hierbei dadurch gemessen, dass sowohl vor als auch nach der definierten Veränderung des Mediums am Empfänger beim Empfang akustischer Oberflächenwellen des Substrats erzeugte Signale miteinander verglichen werden, um die Eigenschaften des zu messenden Körpers zu ermitteln, die die Beschaffenheit einer Oberfläche des Körpers repräsentieren.

In einer vorteilhaften Ausgestaltung steht bei der Anregung akustischer Volumenwellen im Medium durch Umwandlung zumindest eines Teils der Energie der akustischen Oberflächenwellen in Energie der akustischen Volumenwellen das Medium zumindest mit einem Teil seiner Oberfläche in Kontakt mit dem Substrat.

In einer Ausführungsvariante zeichnet sich das Verfahren dadurch aus, dass ein Teil der inneren Oberfläche des Substrats, die dem Medium zugewandt ist, im Wesentlichen plan ist. Insbesondere kann vorgesehen sein, dass im Wesentlichen die gesamte innere Oberfläche des Substrats, die dem Medium zugewandt ist, im Wesentlichen plan ist. Beispielsweise kann vorgesehen sein, dass die innere Oberfläche durch eine ebene Platte gebildet wird.

In hierzu alternativen Ausgestaltungsbeispielen der Erfindung ist vorgesehen, dass zumindest ein Teil der inneren Oberfläche des Substrats, auf der Oberflächenwellen angeregt werden, im Wesentlichen v-förmig oder u-förmig ist. Bei einer V-förmigen Ausbildung der inneren Oberfläche des Substrats kann bei der Durchführung des Verfahrens die Spitze des V-förmigen Substrats vom Körper abgewandt sein. In einer alternativen Ausgestaltungsform ist bei der Durchführung des Verfahrens die Spitze dem Körper zugewandt. Bei einer U-förmigen Ausbildung der inneren Oberfläche des Substrats ist die U-förmige Öffnung bei der Durchführung des Verfahrens in einer Verfahrensvariante zum Körper hingewandt. Alternativ kann sie auch vom Körper abgewandt sein. Vorteilhaft gegenüber einer planaren Ausbildung des Substrats kann bei einer u-förmigen bzw. v-förmigen Ausbildung des Substrats sein, dass die innere Oberfläche des Substrats so mit dem Medium in Kontakt steht und relativ zum Körper anordbar ist, dass ein möglichst großer Teil derjenigen sich im Medium ausbreitenden Volumenwellen, die mit der Oberfläche des Körpers wechselwirken, nach dieser Wechselwirkung auf die innere Oberfläche des Substrats trifft.

In einer Ausgestaltung des Verfahrens ist die Bereitstellung mehrerer Substrate vorgesehen. Dabei sind in einem Beispiel wenigstens zwei der Substrate räumlich beabstandet zueinander angeordnet. Auf wenigstens einem der Substrate werden dabei bei der Durchführung des Verfahrens mittels wenigstens eines Senders akustische Volumenwellen angeregt. Akustische Volumenwellen werden im Medium durch Umwandlung zumindest eines Teils der Energie der so angeregten akustischen Oberflächenwellen angeregt. Dabei werden akustische Oberflächenwellen auf dem Substrat ausgebreitet, auf dem sie mittels des Senders angeregt wurden. Darüber hinaus werden Volumenwellen im Medium ausgebreitet, wobei zumindest ein Teil der sich im Medium ausbreitenden akustischen Volumenwellen mit der Oberfläche des Körpers wechselwirkt. Zumindest ein Teil der Volumenwellen trifft in diesem Ausführungsbeispiel auf die Oberfläche wenigstens eines Substrats auf. Auf dem Substrat bzw. den Substraten, auf dem bzw. auf denen die Volumenwellen auftreffen, werden akustische Oberflächenwellen durch Umwandlung zumindest eines Teils der Energie der akustischen Volumenwellen in akustische Energie des Substrats bzw. der Substrate angeregt. Auf wenigstens einem der Substrate, auf dem die Oberflächenwellen durch Umwandlung zumindest eines Teils dieser Energie angeregt wurden, werden akustische Oberflächenwellen empfangen.

Hierbei kann es sich um den Empfang der akustischen Oberflächenwellen handeln, die direkt vom Sender auf dem betreffenden Substrat angeregt wurden, oder um den Empfang der akustischen Oberflächenwellen, die durch Umwandlung zumindest eines Teils der Energie der akustischen Volumenwellen in akustische Energie des Substrats, angeregt wurden. Auch kann eine akustische Oberflächenwelle empfangen werden, die eine Welle ist, die durch eine Überlagerung von wenigstens einer Oberflächenwelle gebildet ist, die direkt vom Sender auf dem betreffenden Substrat angeregt wurde, und von wenigstens einer Oberflächenwelle, die durch Umwandlung zumindest eines Teils der Energie der akustischen Volumenwelle in akustische Energie des Substrats, angeregt wurde. In einer Ausführungsvariante ist vorgesehen, dass bei einer Messung jeweils nur auf einem Substrat eine Anregung mittels wenigstens eines Senders stattfindet, alternativ können gleichzeitig auf mehreren Substraten Anregungen von Oberflächenwellen mittels jeweils wenigstens eines Senders stattfinden.

Dabei kann der Empfang von Oberflächenwellen auf jedem der Substrate oder alternativ auf nur bestimmten der Substrate erfolgen. Hierbei können eine Mehrzahl von Sendern und/oder Empfängern auf jedem der Substrate bei dem Verfahren eingesetzt werden. Auch kann die relative Position der Substrate zum Körper bzw. zueinander bei einer Messung der Beschaffenheit der Oberfläche verändert werden. Aus beim Empfang der akustischen Oberflächenwellen an dem Empfänger bzw. den Empfängern erzeugten Signalen werden Eigenschaften des zu messenden Körpers ermittelt. In einem Ausführungsbeispiel des Verfahrens werden Informationen über die geometrische Anordnung wenigstens zweier Substrate zueinander und/oder Informationen über die Lage des oder der Empfänger und des oder der Sender auf den Substraten bei der Ermittelung der Eigenschaften des zu messenden Körpers, die die Beschaffenheit der Oberfläche des Körpers repräsentieren, mit herangezogen.

In einer Ausführungsvariante wird zur Messung der Beschaffenheit der Oberfläche des Körpers wenigstens ein Abstand zwischen dem Substrat und einem Teilbereich der Oberfläche des Körpers ermittelt. Es kann dabei vorgesehen sein, dass mehrere solcher Abstände zwischen dem Substrat und mehreren Teilbereichen des Körpers in ihrer räumlichen Anordnung zueinander aus Signalen ermittelt werden, die beim Empfang akustischer Oberflächenwellen vom Empfänger des Substrats erzeugt worden sind.

Bei einem Ausführungsbeispiel der Erfindung ist vorgesehen, dass beim Empfang der Oberflächenwellen der Empfänger und/oder beim Anregen der Oberflächenwellen der Sender auf der dem Medium abgewandten äußeren Oberfläche des Substrats angeordnet sind.

Hierdurch kann insbesondere sichergestellt werden, dass in einer Ausführungsvariante weder die Empfänger noch die Sender in unmittelbarem Kontakt zum Medium stehen.

Es ist in einem Ausführungsbeispiel vorgesehen, dass Sender und/oder Empfänger jeweils als Sender-Empfängereinheit ausgebildet sind. Dies bedeutet, dass wenigstens einer der Sender oder Empfänger in diesem Ausführungsbeispiel sowohl als Sender als auch als Empfänger fungieren kann, dass also eine Wahlmöglichkeit des Einsatzes der Sender-Empfängereinheit besteht. Insbesondere kann vorgesehen sein, dass alle Sender und/oder Empfänger als Sender-Empfänger-Einheiten ausgebildet sind. Beispielsweise kann es sich bei einer Sender-Empfänger-Einheiten um einen Interdigitalwandler handeln, der dazu eingerichtet und vorgesehen ist, sowohl Oberflächenwellen auf dem Substrat anzuregen als auch ein Signal nach Empfang von auf der Oberfläche des Substrats sich ausbreitenden Oberflächenwellen zu erzeugen. Die Sender-Empfänger-Einheiten sind in einem Ausführungsbeispiel in vorbestimmten Abständen zueinander angeordnet. Insbesondere können - insofern es sich um mehr als zwei Sender-Empfänger-Einheiten handeln - diese äquidistant oder alternativ in sich voneinander unterscheidenden Abständen zueinander angeordnet sein.

In einer Ausführungsvariante sind mehrere Sender-Empfänger-Einheiten voneinander beabstandet auf dem Substrat angeordnet und es werden zur Messung der Beschaffenheit einer Oberfläche des Körpers im zeitlichen Wechsel jeweils eine oder mehrere der Senderempfängereinheiten Oberflächenwellen anregen, wobei nach Anregung dieser Oberflächenwellen eine oder mehrere der anderen Sender-Empfänger-Einheiten Oberflächenwellen empfangen und dabei als Empfänger jeweils ein Signal erzeugen und aus einem oder mehreren dieser Signale die Beschaffenheit einer Oberfläche des Körpers ermittelt wird. Dieses Verfahren kann beispielsweise mit zwei Sender-Empfänger-Einheiten oder drei Sender-Empfänger-Einheiten oder mehr als drei Sender-Empfänger-Einheiten durchgeführt werden.

In einer Ausführungsvariante des Verfahrens ist vorgesehen, dass mehrfache zeitlich beabstandete Anregungen mittels des Senders erfolgen, wobei zwischen wenigstens zweien dieser Anregungen eine Bearbeitung des Körpers derart erfolgt, dass die Beschaffenheit einer Oberfläche des Körpers geändert wird. Hierbei kann vorgesehen sein, dass die Eigenschaften des Körpers, die die Beschaffenheit einer Oberfläche des Körpers repräsentieren, vor und nach der Bearbeitung des Körpers durch das Verfahren gemessen wird.

Bei einem Ausführungsbeispiel des Verfahrens erfolgt während der Anregung akustischer Oberflächenwellen mittels des Senders oder mittels mehrerer Sender eine Bearbeitung des Körpers derart, dass die Beschaffenheit einer Oberfläche des Körpers geändert wird.

In einer Ausführungsvariante werden während der Bearbeitung des Körpers Eigenschaften, die die Beschaffenheit der Oberfläche des Körpers repräsentieren, gemessen.

Damit kann das Verfahren zur Messung der Beschaffenheit einer Oberfläche des Körpers in ein Verfahren zur Messung der Änderung der Beschaffenheit einer Oberfläche des Körpers überführt werden. Insbesondere wird es so möglich, in bestimmten Ausführungsvarianten die zeitliche Änderung der Beschaffenheit der Oberfläche eines Körpers mittels des Verfahrens zu messen.

Es ist in einem Ausführungsbeispiel vorgesehen, dass die Bearbeitung des Körpers in Abhängigkeit davon gesteuert wird, welche Beschaffenheit der Oberfläche des Körpers vor der Bearbeitung gemessen wurde. Hierdurch kann erreicht werden, dass die Beschaffenheit der Oberfläche des Körpers, die vor der Bearbeitung gemessen wird, mit einer Sollbeschaffenheit abgeglichen wird, die z. B. vom Anwender des Verfahrens vorgegeben wird. Falls eine Abweichung festgestellt wird, wird in einer Ausführungsvariante eine Bearbeitung des Körpers veranlasst wird, die die genannte Abweichung der Beschaffenheit der Oberfläche des Körpers von der Sollabweichung verringert. Ein Beispiel hierfür ist die Fertigung eines Werkstücks, das den zu messenden Körper darstellt, nach einer Vorgabe, die die gewünschte Sollbeschaffenheit der Oberfläche des Körpers beschreibt. Die Bearbeitung des Körpers wird in einem Ausführungsbeispiel des Verfahrens in Abhängigkeit von der durch die Messung ermittelten Sollbeschaffenheit gesteuert werden.

In einem Ausführungsbeispiel besteht die Bearbeitung des Körpers zumindest in einem Abtragen von Material vom Körper. Das Abtragen von Material vom Körper kann hierbei mittels Schleifen und/oder Rundschleifen und/oder Drehbearbeiten und/oder Erodierens und/oder Senkerodierens und/oder Fräsen und/oder Bohren vorgenommen werden. Es kann in einem Ausführungsbeispiel vorgesehen sein, dass ein beim Drehbearbeiten und/oder Schleifen und/oder Rundschleifen verwendetes flüssiges Kühlmittel als Medium dient. Ebenso kann vorgesehen sein, dass eine elektrisch nicht leitende Flüssigkeit als Medium dient. Eine solche Flüssigkeit kann z. B. beim Erodieren und/oder Senkerodieren zum Einsatz kommen. Beispiele für eine solche Flüssigkeit sind Öl oder desionisiertes Wasser.

Eine beispielhafte Anwendung eines solchen Verfahrens ist die Differenzmessung und/oder Dimensionsmessung und/oder Rundlaufprüfung eines Körpers, der ein Werkstück darstellt, während einer Schleif- und/oder Drehbearbeitung. Hierbei kann mittels des Verfahrens z. B. zeitgleich zur Bearbeitung der Abtrag am Körper gemessen werden. Auch eine Messung der Position und Oberflächenbeschaffenheit von bei der Bearbeitung vom Körper abgetragener Materie ist mittels des Verfahrens möglich. Beim Einsatz des Verfahrens beim Drehbearbeiten des Werkstücks kann das Substrat mit einem bestimmten Winkelversatz zum Körper angebracht werden.

Eine andere beispielhafte Anwendung des Verfahrens ist der Einsatz des Verfahrens beim Flächenschleifen eines Körpers, der ein Werkstück darstellt, hierbei kann das Substrat in der durch die Oberfläche des Körpers lokal definierten Tangentialebenen neben einer Schleifscheibe einer Schleifmaschine angebracht sein, die zum Flächenschleifen eingesetzt wird. Beim Schleifen einer ebenen Fläche kann das Verfahren somit zur Überprüfung der Ebenheit der bearbeiteten Oberfläche des Körpers eingesetzt werden.

Bei einer Ausgestaltungsvariante der Erfindung besteht die Bearbeitung des Körpers zumindest in einer Anreicherung des Körpers mit Material, insbesondere in einer Beschichtung der Oberfläche des Körpers mit Material. Hierbei ist es vorgesehen, dass die Messung der Änderung der Beschaffenheit der Oberfläche während der Anreicherung erfolgt. Alternativ kann die Messung vor und nach Anreicherung des Körpers mit Material erfolgen.

Beispielsweise ist das Verfahren zur Messung der Oberflächenbeschichtung eines Körpers, der ein Werkstück darstellt, beim Galvanisieren einsetzbar. Hierbei misst das Verfahren wie die Anreicherung der Oberfläche des Körpers mit dem Galvanisierungsprozess fortschreitet.

In diesem Zusammenhang wird betont, dass das Medium in verschiedenen Ausführungsvarianten des Verfahrens im Allgemeinen verschiedene Eigenschaften und/oder Aggregatszustände aufweisen kann. So kann vorgesehen sein, dass das Medium eine Flüssigkeit oder ein Festkörper (z. B. ein Granulat) ist. Darüber hinaus kann das Medium auch eine Suspension oder ein Gemisch aus gasförmigen und flüssigen Stoffen sein. In bestimmten Ausführungsbeispielen ist das Medium rein flüssig.

Insbesondere kann in diesen Ausführungsbeispielen vorgesehen sein, dass es sich um eine homogene Flüssigkeit und/oder eine elektrisch nicht leitende Flüssigkeit handelt.

In den Ausführungsbeispielen, in denen die Beschaffenheit der Oberfläche des Körpers vor und nach der Bearbeitung eines Körpers gemessen wird, wobei die Bearbeitung in einem Abtragen von Material vom Körper mittels Erodierens und/oder Senkerodierens besteht, kann zusätzlich vorgesehen sein, dass aus beim Empfang akustischer Oberflächenwellen des Substrats am Empfänger erzeugten Signalen die Position einer beim Erodieren und/oder Senkerodieren verwendeten Elektrode relativ zum Körper gemessen wird, wobei die Elektrode bei der Messung mit dem Medium so in Kontakt ist, dass zumindest eine der im Medium sich ausbreitenden akustischen Volumenwellen mit der Oberfläche der Elektrode wechselwirkt. Dies kann vorteilhaft sein, um bei weiteren Bearbeitungsschritten, insbesondere bei einem weiteren Senkerodieren und/oder Erodieren des Körpers eine Steuerung des Erodierens und/oder des Senkerodierens z. B. eine Veränderung der relativen Position der Elektrode dergestalt vorzunehmen ist, dass durch das Erodieren und/oder Senkerodieren nach der Veränderung die Beschaffenheit der Oberfläche des Körpers der Sollbeschaffenheit voraussichtlich angenähert ist.

Bei Ausführungsvarianten des Verfahrens ist vorgesehen, dass die gemessene Beschaffenheit einer Oberfläche des Körpers wenigstens eine der folgenden Größen umfasst: die lokale Rauigkeit und/oder Oberflächenbeschaffenheit zumindest eines Teil der Oberfläche des Körpers, die lokale Krümmung zumindest eines Teils der Oberfläche des Körpers, den lokalen räumlichen Konturverlauf zumindest eines Teils der Oberfläche des Körpers und/oder Informationen über das von der Oberfläche umschlossene Volumen des Körpers und/oder Informationen über den Abstand der Oberfläche des Körpers zu dem Substrat.

Es kann vorgesehen sein, dass der Sender und/oder der Empfänger aus einem piezoelektrischen Material besteht. Bei dem Verfahren kann in einem Ausführungsbeispiel vorgesehen sein, dass das Substrat eine äußere Oberfläche aufweist, wobei der Abstand der inneren Oberfläche und der äußeren Oberfläche des Substrats derart festgelegt ist, dass gleichlaufende Oberflächenwellen sowohl auf der inneren als auch auf der äußeren Oberfläche des Substrats vom Sender angeregt werden.

Es ist in einem Ausführungsbeispiel vorgesehen, dass der Abstand der äußeren Oberfläche und der inneren Oberfläche des Substrats derart bestimmt ist, dass die auf dem Substrat angeregten gleichlaufenden Oberflächenwellen im Wesentlichen ausschließlich Lambwellen sind und/oder Wellen aus einem Übergangsbereich zwischen Lamb- und Rayleigh-Wellen sind.

Werden auf der Oberfläche des Körpers bei der Durchführung des Verfahrens zur Messung der Beschaffenheit einer Oberfläche des Körpers Oberflächenwellen durch die Wechselwirkung zumindest eines Teils der sich im Medium ausbreitenden akustischen Volumenwellen mit der Oberfläche des Körpers angeregt, so kann das Verfahren sich dadurch auszeichnen, dass diese Oberflächenwellen im Wesentlichen ausschließlich Rayleigh-Wellen sind.

Es kann vorgesehen sein, dass zur Bestimmung der Beschaffenheit einer Oberfläche eines Körpers zusätzlich eine Referenzmessung vorgenommen wird, bei der der Körper nicht in Kontakt mit dem Medium ist. Darüber hinaus kann vorgesehen sein, dass in einem Ausführungsbeispiel bei der Referenzmessung ein anderer Körper mit einer zuvor bekannten Beschaffenheit seiner Oberfläche mit dem Medium auf eine festgelegte Weise in Kontakt ist, sodass zumindest ein Teil der sich im Medium ausbreitenden akustischen Volumenwellen mit der Oberfläche des anderen Körpers wechselwirkt, wobei ein vom Empfänger beim Empfang akustischer Oberflächenwellen des Substrats erzeugtes Referenzsignal aufgenommen wird, das zur Ermittlung der Eigenschaften des zu messenden Körpers, die die Beschaffenheit der Oberfläche des Körpers repräsentieren, herangezogen wird.

Eine solche Referenzmessung kann mit einem anderen Körper erfolgen, der eine Sollbeschaffenheit seiner Oberfläche aufweist, die ebenfalls bei dem zu messenden Körper erreicht werden soll. Insbesondere kann das Verfahren dazu verwendet werden, dass der Körper nach einer ersten Messung der Beschaffenheit seiner Oberfläche bearbeitet wird, insbesondere gemäß einem oben in einem der Ausführungsbeispiele dargestellten Verfahrensschritt zur Bearbeitung des Körpers.

Ein weiterer Aspekt der Erfindung ist die Vorrichtung des Anspruchs 15.

Danach ist eine Vorrichtung zur Messung der Beschaffenheit einer Oberfläche eines Körpers, insbesondere zur Durchführung des oben beschriebenen erfindungsgemäßen Verfahrens, vorgesehen. Diese umfasst wenigstens ein Substrat mit einer einem Medium zugewandten inneren Oberfläche sowie wenigstens einen Sender zum Anregen akustischer Oberflächenwellen auf dem Substrat durch Einspeisung akustischer Wellenenergie in das Substrat. Hierbei werden in dem Medium akustische Volumenwellen durch Umwandlung zumindest eines Teils der Energie der akustischen Oberflächenwellen in Energie akustischer Volumenwellen des Mediums angeregt. Hierbei wechselwirkt zumindest ein Teil der sich im Medium ausbreitenden akustischen Volumenwellen mit der Oberfläche eines zumindest teilweise im Medium befindlichen Körpers. Darüber hinaus umfasst die Vorrichtung einen zum Empfang akustischer Oberflächenwellen eingerichteten Empfänger und Auswertmittel zur Ermittelung von Eigenschaften des zu messenden Körpers, die die Beschaffenheit der Oberfläche des Körpers repräsentieren, aus beim Empfang der akustischen Oberflächenwellen am Empfänger erzeugten Signalen.

Zudem ist das Auswertemittel ausgebildet, aus Unterschieden oder Gemeinsamkeiten von Signalen, die bei einer Änderung eines Abstandes zwischen einer dem Medium zugewandten inneren Oberfläche des Substrats und dem Schwerpunkt des Körpers erzeugt werden, Eigenschaften des Körpers zu ermitteln.

Der Ausdruck "zumindest teilweise im Medium befindlicher Körper" bedeutet hierbei, dass der Körper zumindest mit einem Teil seiner Oberfläche an das Medium angrenzt.

Ein Beispiel eines Auswertmittels ist eine Recheneinheit mit einem auf ihm ausgeführten Programm zur Ermittelung von Eigenschaften des zu messenden Körpers, die die Beschaffenheit der Oberfläche des Körpers repräsentieren, aus beim Empfang der akustischen Oberflächenwellen am Empfänger erzeugter Signale. Zur Übertragung des Signals vom Empfänger zum Auswertmittel können Signalübertragungsmittel wie beispielsweise Datenleitungen und/oder Funkdatenübertragungsmittel verwendet werden.

Alternative Ausgestaltungen der beanspruchten Vorrichtung gelten in analoger Weise auch für das beanspruchte Verfahren und umgekehrt.

Weitere vorteilhafte Ausgestaltungsvarianten des Verfahrens und der Vorrichtung sind auch durch die Unteransprüche gegeben.

Zusätzliche Vorteile und Merkmale werden bei der nachfolgenden Beschreibung von Ausführungsbeispielen deutlich werden.

So zeigen die
- Fig. 1A-1C: schematische Schnittzeichnung durch eine Vorrichtung während der Durchführung eines Verfahrens zur Messung der Beschaffenheit einer Oberfläche eines Körpers;
- Fig. 2A und 2B: schematische Schnittzeichnung durch eine Vorrichtung eines zweiten Ausführungsbeispieles während der Durchführung eines Verfahrens zur Messung der Beschaffenheit einer Oberfläche eines Körpers.
- Fig. 3A - 3F: schematische Schnittzeichnung durch sechs Vorrichtungen gemäß sechs weiteren Ausführungsbeispielen während der Durchführung eines Verfahrens zur Messung der Beschaffenheit einer Oberfläche eines Körpers.

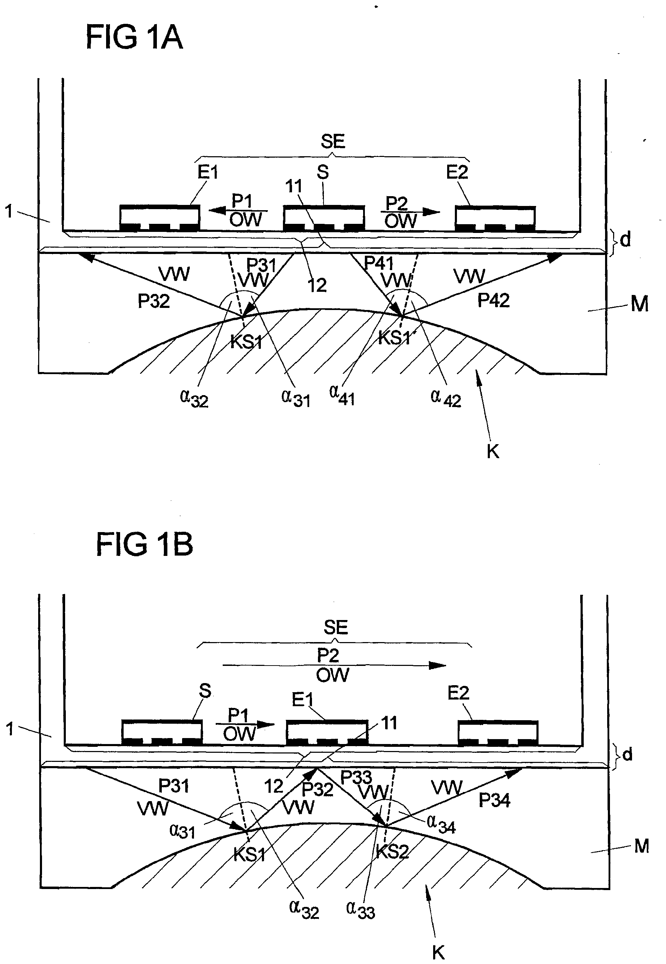

In der geschnittenen Ansicht in Figur 1A ist ein Substrat 1 dargestellt, das im Wesentlichen durch eine ebene Platte ausgebildet ist, die über zwei senkrecht von dieser ebenen Platte abstehende Verbindungsstücke mit einer nicht dargestellten Restapparatur verbunden ist. Das Substrat weist eine einem einer homogenen Flüssigkeit, die ein Medium M darstellt, zugewandte innere Oberfläche 11 und eine dem Medium abgewandte äußere Oberfläche 12 auf. Der Abstand der inneren Oberfläche 11 und der äußeren Oberfläche 12 ist die Dicke des Substrats 1 und ist mit d bezeichnet.

Weiterhin ist ein Teil eines Körpers K mit einer gekrümmten Oberfläche dargestellt, dessen Oberflächenbeschaffenheit zu messen ist. Der Körper K ist so auf der zur inneren Oberfläche 11 hingewandten Seite des Substrats angeordnet, dass die Oberfläche des Körpers K und die innere Oberfläche 11 des Substrats 1 einen Zwischenraum bilden, der mit dem Medium M gefüllt ist.

Auf der äußeren Oberfläche 12 der ebenen Platte, die das Substrat 1 bildet, sind drei schematisch dargestellte Sender-Empfänger-Einheiten SE abgebildet, die in vorliegendem Ausführungsbeispiel durch Interdigitalwandler realisiert sind. Diese Sender-Empfänger-Einheiten SE zeichnen sich dadurch aus, dass mittels ihrer sowohl eine Anregung akustischer Oberflächenwellen OW auf dem Substrat durch Einspeisung akustischer Wellenenergie in das Substrat erfolgen kann, als auch, dass sie zum Empfang akustischer Oberflächenwellen OW des Substrates eingerichtet sind, wobei beim Empfang akustischer Oberflächenwellen des Substrats von ihnen ein entsprechendes Signal erzeugbar ist.

Die drei Sender-Empfänger-Einheiten SE sind entlang einer gedachten Linie auf dem Substrat so angeordnet, dass eine der Sender-Empfänger-Einheiten SE im Wesentlichen mittig zwischen den beiden anderen Sender-Empfänger-Einheiten SE positioniert ist.

Ein Ablauf eines Verfahrens zur Messung der Beschaffenheit einer Oberfläche des Körpers erfolgt dergestalt, dass die mittlere der drei auf der äußeren Oberfläche des Substrats angebrachten beabstandeten Sender-Empfänger-Einheiten SE zunächst als Sender S fungiert und akustische Oberflächenwellen OW anregt, die von dem Sender ausgehen. Hierbei wird akustische Wellenenergie in das Substrat eingespeist. Zumindest ein Teil der Energie der akustischen Oberflächenwellen OW des Substrats wird in akustische Volumenwellen VW des Mediums M umgewandelt. Im Wesentlichen werden die Volumenwellen unter einem Winkel arcsin(Cₘ/Cₛ) bezogen auf eine vertikale Bezugslinie senkrecht zur inneren Oberfläche 11 des Substrats in das Medium ausgekoppelt.

Zwei Pfeile, die mit P1 und P2 gekennzeichnet sind, repräsentieren schematisch die Ausbreitungsrichtung der vom in der Mitte zwischen den beiden abgebildeten Sender-Empfänger-Einheiten, die vorliegend als Empfänger E1 und E2 betrieben werden, angeordneten Sender S angeregten Oberflächenwellen OW. Die beiden Oberflächenwellen breiten sich jeweils vom Sender S in Richtung eines der Empfänger E1, E2 aus, in die jeweils einer der Pfeile weist.

Darüber hinaus sind in der Figur zwei Pfeile P31 und P41 abgebildet, die von der inneren Oberfläche des Substrats 1 ausgehen, und die vom Substrat 1 ausgehende akustische Volumenwellen VW darstellen, die sich entlang zweier unterschiedlicher Pfade im Medium ausbreiten. (Die abgebildeten Winkel zwischen den Pfeilen und dem Substrat sind nur schematisch zu verstehen und stellen nicht die exakt realisierten Winkel zwischen den Hauptausbreitungsrichtungen der Volumenwellen und dem Substrat 1 dar). Eine der Volumenwellen breitet sich somit in Richtung des Pfeils P31 im Medium aus und trifft in einem Bereich KS1 auf die Oberfläche des Körpers K. In diesem Bereich wechselwirkt der Körper K mit der im Medium M sich ausbreitenden akustischen Volumenwelle VW. Hierbei besteht diese Wechselwirkung zumindest in einer teilweisen Reflexion der Volumenwelle an der Oberfläche des Körpers.

Die auf den Körper K auftreffenden Volumenwellen werden im Allgemeinen nicht vollständig reflektiert, sondern ein Teil der in der jeweils auftretenden Volumenwelle gespeicherten akustischen Energie wird im Allgemeinen vom Körper absorbiert und unter Umwandlung dieser Energie in akustische Energie des Körpers K umgesetzt, wobei bei dieser Umwandlung wenigstens eine nicht abgebildete akustische Oberflächenwelle OW auf der Oberfläche des Körpers angeregt wird. Schematisch ist hierbei durch eine eingezeichnete gestrichelte gedachte Reflexionsebene entlang der Normalen der Körperoberfläche am Ort KS1' angedeutet, dass die Reflexion gemäß dem Reflexionsgesetz an der Oberfläche des Körper K erfolgt und sich dabei die Hauptausbreitungsrichtung P31 der Volumenwelle in eine davon abweichende Ausbreitungsrichtung P32 der Volumenwelle abwandelt, die durch einen Pfeil P32 dargestellt wird. Geometrisch ist dies durch die Winkel α₃₁ und α₃₂ angezeigt, die die Ausbreitungsrichtungen P31 und P32 der Volumenwellen VW vor und nach der Reflexion relativ zur Oberflächennormalen aufweisen. Die andere Volumenwelle VW breitet sich entsprechend in Richtung des Pfeils P41 im Medium aus und trifft in einem Bereich KS2 auf die Oberfläche des Körpers K. In diesem Bereich wechselwirkt sie mit dem Körper K und wird reflektiert. Auch hier ist eine gedachte Reflexionsebene durch eine gestrichelt eingezeichnete. Die Hauptausbreitungsrichtung nach der Reflexion ist durch einen Pfeil P42 gekennzeichnet. Die Reflexionswinkel werden durch α₄₁ und α₄₂ angezeigt.

Nach der Reflexion breiten sich die beispielhaft durch die Pfeile P42 und P32 dargestellten Volumenwellen so aus, dass sie jeweils an zueinander beabstandeten Bereichen auf die innere Oberfläche 11 des Substrats 1 treffen. Hierbei wird zumindest ein Teil der in der akustischen Volumenwelle gespeicherten Energie in akustische Energie des Substrates umgewandelt, indem dabei akustische Oberflächenwellen angeregt werden.

Die Eigenschaften der angeregten Oberflächenwellen hängen unter anderem von dem Abstand d ab, der den Abstand der inneren Oberfläche 11 zur äußeren Oberfläche des Substrats kennzeichnet. Im vorliegenden Ausführungsbeispiel ist dieser Abstand d dergestalt gewählt, dass auf dem Substrat angeregte Oberflächenwellen im Wesentlichen gleichlaufend sind und im Wesentlichen ausschließlich Lambwellen sind.

Die vom Sender direkt ausgesandten Oberflächenwellen treffen auf die zum Empfang akustischer Oberflächenwellen eingerichteten Empfänger E1 und E2, nachdem sie sich in Richtung P1 bzw. P2 im Substrat ausgebreitet haben. Sie erzeugen dabei jeweils ein Signal, das über eine nicht abgebildete Leitung nach außen geführt wird. Außerdem treffen akustische Oberflächenwellen, die von auf die innere Oberfläche 11 des Substrats auftreffenden, sich entlang der Pfade P41 und P42 bzw. P31 und P32 ausbreitenden Volumenwellen erzeugt werden, bei den Empfängern E1 bzw. E2 ein (nicht abgebildet) und werden von diesen empfangen, wobei von den Empfängern Signale erzeugt werden. Die Informationen aus diesen an den Empfängern E1 und E2 erzeugten Signalen werden dergestalt verarbeitet, dass Eigenschaften des zu messenden Körpers ermittelt werden, die die Beschaffenheit der Oberfläche des Körpers repräsentieren.

Um weitere Signale und damit eine zuverlässigere Bestimmung der Eigenschaften des zu messenden Körpers ermitteln zu können, die die Beschaffenheit einer Oberfläche des Körpers repräsentieren, können die Sende-Empfänger-Einheiten SE zusätzlich auch wie in dem in Figur 1B gezeigten Beispiel betrieben werden.

Hierbei übernimmt der in der Figur 1A die vormals mit E1 bezeichnete und als Empfänger E1 betriebene Sender-Empfänger-Einheit SE die Funktion des Senders S, wohingegen die vormals mit S bezeichnete und als Sender S betriebene Sender-Empfänger-Einheit nunmehr die Funktion eines Empfängers E1 übernimmt. Somit werden zwei der Sende-Empfänger-Einheiten SE, die vormals den Sender S bzw. den Empfänger E1 gebildet haben, in ihrer Funktion vertauscht. Die Anordnung der Sender-Empfänger-Einheiten SE, des Substrats und des Körpers sowie des Medium zueinander bleibt unverändert. Damit sind die Sender-Empfänger-Einheiten SE weiterhin entlang einer gedachten Linie auf der äußeren Oberfläche des Substrats angeordnet, wobei einer der Empfänger E1 in der Mitte zwischen dem Sender S und dem anderen Empfänger E2 angeordnet ist.

Hierdurch wird erreicht, dass die angeregten akustischen Oberflächenwellen bzw. Volumenwellen, von einer anderen Sende-Empfänger-Einheit SE ausgesandt werden als in Figur 1A und von dieser auf die Oberfläche des Körpers eintreffen. Durch den Sender S werden mittelbar akustische Volumenwellen VW durch die Umwandlung zumindest eines Teils der Energie der akustischen Oberflächenwellen OW in Energie der akustischen Volumenwellen VW angeregt. In der Abbildung ist schematisch die Auskopplung einer Volumenwelle aus der Oberfläche des Substrats 1 durch einen Verlauf von Pfeilen P31, P32, P33 und P34 gezeigt. (Die abgebildeten Winkel zwischen den Pfeilen und dem Substrat 1 bzw. dem Körper K sind nur schematisch zu verstehen und stellen nicht die exakt realisierten Winkel zwischen den Hauptausbreitungsrichtungen der Volumenwellen und dem Substrat 1 dar). Die Pfeile repräsentieren dabei die Hauptausbreitungsrichtung der Volumenwelle VW.

Eine Front der Volumenwelle breitet sich von der inneren Oberfläche des Substrats 11 ausgehend nahezu gradlinig so aus, dass sie auf die gekrümmte Oberfläche des Körpers K in einem Bereich KS1 trifft. Dort wird sie teilweise gemäß dem Reflexionsgesetz reflektiert und regt eine (nicht abgebildet) Oberflächenwelle auf dem Körper an. Die Richtung der Volumenwelle nach der Reflexion ist durch die Richtung des Pfeils P32 dargestellt. Die Reflexionsebene verläuft entlang der Normalen auf der Oberfläche des Körpers im Bereich KS1 und ist durch eine gestrichelt gezeichnete Linie repräsentiert. Die Volumenwelle trifft nach Ausbreitung entlang der Richtung des Pfeils P32 auf die innere Oberfläche 11 des Substrats 1 und ein Teil ihrer Energie wird dabei umgewandelt, wobei eine (nicht abgebildete) Oberflächenwelle auf dem Substrat 1 angeregt wird. Darüber hinaus wird ein Teil der Volumenwelle gemäß dem Reflexionsgesetz an der Oberfläche des Substrats reflektiert und breitet sich nahe zu gradlinig durch das Medium M aus und trifft auf den Körper K in einem Bereich KS2, wo sie mit dem Körper wechselwirkt und eine (nicht dargestellte) Oberflächenwelle anregt. Die Volumenwelle wird zum Teil an der Oberfläche des Körpers im Bereich KS2 reflektiert (die Winkel die die Hauptausbreitungsrichtungen P33 bzw. P34 mit der durch eine gestrichelte Linie dargestellten Normalen der Oberfläche im Bereich KS2 bilden, sind dabei mit α₃₃ und α₃₄ bezeichnet) und breitet sich dann gemäß dem Reflexionsgesetz in Richtung der inneren Oberfläche 31 des Substrats 1 von der Stelle KS2 aus. Sie trifft auf die innere Oberfläche des Substrats und ein Teil ihrer Energie wird dort in eine (nicht dargestellte) akustische Oberflächenwelle umgewandelt.

An den Empfängern E1 und E2 werden sowohl von den mittelbar durch Wechselwirkung des Substrats mit den Volumenwellen erzeugten Oberflächenwellen als auch den unmittelbar vom Sender S angeregten Oberflächenwellen, die sich entlang der durch Pfeile zwischen Sender und Empfänger bezeichneten Richtungen P1 und P2 auf dem Substrat ausbreiten, jeweils Signale erzeugt. Aus diesen Signalen werden Eigenschaften des zu messenden Körpers ermittelt, die die Beschaffenheit der Oberfläche des Körpers repräsentieren.

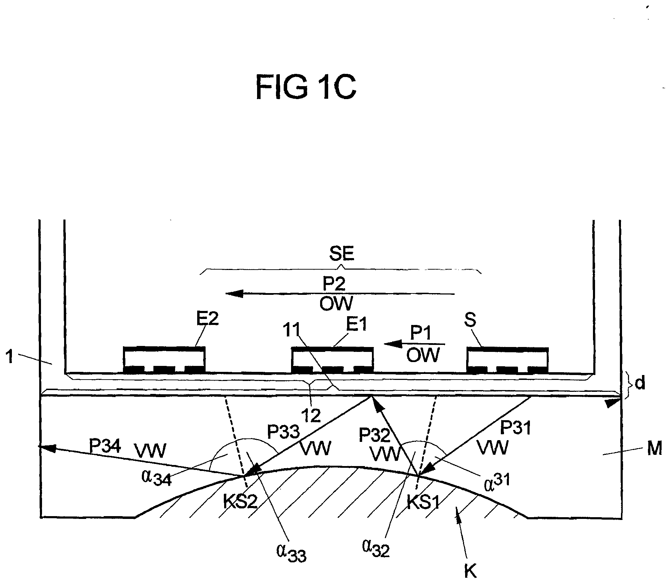

Die Figur 1C zeigt eine dritte Variation des Einsatzes der Sende-Empfänger-Einheiten SE, wobei nunmehr der vormalige (d. h. der in den Ausführungsbeispielen, die in den Figuren 1A und 1B dargestellt sind) Empfänger E2 als Sender S eingesetzt wird und die beiden anderen Sende-Empfänger-Einheiten SE als Empfänger E1 und E2 dienen. Bis auf diese Änderung der Funktion der Sende-Empfänger-Einheiten ist die Anordnung des Substrats 1, der Sende-Empfänger-Einheiten SE und des Körpers dabei gleich zu der in den Figur 1A und 1B beschriebenen. Der Unterschied zur Figur 1B ist, dass die beiden an den jeweiligen einander gegenüberliegenden Enden einer gedachten Linie liegenden Sende-Empfänger-Einheiten, zwischen denen mittig der Empfänger E1 angeordnet ist, in ihrer Funktion als Sender S und Empfänger E2 gegeneinander vertauscht sind.

Hierbei werden akustische Oberflächenwellen auf dem Substrat 1 durch Einspeisung akustischer Wellenenergie in das Substrat 1 mittels des Senders S angeregt, wobei zumindest ein Teil der Energie der akustischen Oberflächenwellen OW in akustische Volumenwellen VW des Mediums umgewandelt wird. Exemplarisch ist die Ausbreitung einer dieser Volumenwellen - analog zur Figur 1B - durch das Medium entlang eines Pfades P31, P32, P33 und P34 gezeichnet, wobei die entsprechende Volumenwelle an zwei unterschiedlichen Stellen der Oberfläche des Körpers KS1 und KS2 mit diesem wechselwirkt und an diesem zumindest zum Teil reflektiert wird. Nach der Reflexion an der Stelle KS1 trifft die Volumenwelle, die sich entlang der durch P32 gekennzeichneten Ausbreitungsrichtung hauptsächlich ausbreitet, auf die innere Oberfläche 11 des Substrats 1 und regt dort in dem Substrat akustische Oberflächenwellen an. Diese mittelbar angeregten akustischen Oberflächenwellen treffen, wie die unmittelbar von dem Sender S auf dem Substrat 1 angeregten akustischen Oberflächenwellen, auf die Empfänger E1 und E2 und werden dort in Signale umgewandelt, die insgesamt zur Bestimmung von Eigenschaften des zu messenden Körpers K dienen, die die Beschaffenheit der Oberfläche des Körpers repräsentieren.

In dem vorliegenden Beispiel einer Volumenwelle VW breitet sich die Volumenwelle VW entlang einer durch den Pfeil P33 angezeigten Hauptausbreitungsrichtung nach teilweiser Reflexion an der inneren Oberfläche 11 des Substrats 1 weiter durch das Medium auf und trifft im Bereich KS2 auf die Oberfläche des Körpers K, wo sie nach dem Reflexionsgesetz reflektiert wird und sich nach dieser Reflexion in die durch den Pfeil P34 angezeigte Hauptausbreitungsrichtung weiter ausbreitet. In vorliegendem Beispiel der Ausbreitung einer Volumenwelle VW trifft diese nach der zweiten Reflexion im Bereich KS2 auf der Oberfläche des Körpers nicht unmittelbar auf die innere Oberfläche 11 des Substrats 1.

Bei den Figuren 1A, 1B und 1C sind also mehrere Sende-Empfänger-Einheiten SE voneinander beabstandet auf dem Substrat 1 angeordnet. Es werden zur Messung der Beschaffenheit einer Oberfläche des Körpers K im zeitlichen Wechsel jeweils eine oder mehrere der Sende-Empfänger-Einheiten SE, in den besagten Figuren jeweils eine Empfängereinheit, als Sender S Wellen anregen, wobei nach Anregung dieser Wellen die zwei anderen Sende-Empfänger-Einheiten SE Oberflächenwellen empfangen und dabei als Empfänger E1, E2 jeweils Signale erzeugen und aus einem oder mehreren dieser Signale die Beschaffenheit der Oberfläche des Körpers ermittelt wird, wobei hierzu Eigenschaften gemessen werden, die die Beschaffenheit der Oberfläche des Körpers repräsentieren. Insbesondere kann aus den Unterschieden der empfangenen Signale zueinander auf Eigenschaften des Körpers geschlossen werden. So unterscheiden sich aufgrund der unterschiedlichen Wege, die die akustischen Volumen- und Oberflächenwellen zurücklegen, die Signale im Allgemeinen in Abhängigkeit von der Beschaffenheit der Oberfläche des Körpers signifikant, je nachdem welche der Sende-Empfänger-Einheiten SE als Sender S zur Anregung von akustischen Oberflächenwellen OW bzw. mittelbar akustischen Volumenwellen VW eingesetzt wird.

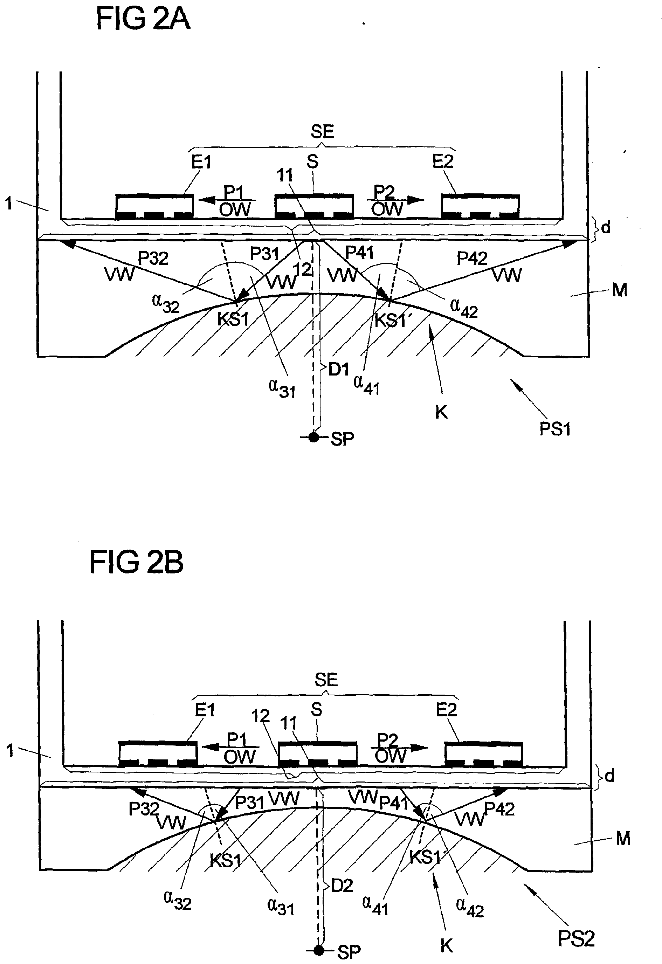

Figur 2A zeigt eine Schnittzeichnung, die eine schematische Darstellung der Durchführung eines Verfahrens zur Messung der Beschaffenheit einer Oberfläche eines Körpers K abbildet. Das Substrat, die Sender-Empfangs-Einheiten, das Medium und der Körper K sind wie in Zusammenhang mit der Figur 1A besprochen ausgebildet und zueinander angeordnet. Strukturell unterscheiden sich die beiden Abbildungen Figur 1A und Figur 1B nur dadurch, dass zusätzlich der Schwerpunkt des Körpers SP und der minimale Abstand zwischen dem Schwerpunkt des Körpers SP und der inneren Oberfläche 11 des Substrats 1, der mit D1 bezeichnet ist, eingezeichnet sind. Eine gestrichelte Linie zeigt den minimalen Abstand zwischen dem Schwerpunkt SP und der inneren Oberfläche des Körpers. Die Position des Körpers K relativ zum Substrat 1 ist mit PS1 bezeichnet.

Es breiten sich ähnlich wie in Zusammenhang mit dem Ausführungsbeispiel aus Figur 1A beschrieben Volumenwellen entlang verschiedener Ausbreitungswege, nämlich entlang des Ausbreitungswegs P41, P42 und P31, P32 aus, wobei diese mit der Oberfläche des Körpers K wechselwirken. Die Wechselwirkungsbereiche sind mit KS1 und KS1' gekennzeichnet. Man beachte, dass die Volumenwellen nach der jeweiligen Wechselwirkung mit der Oberfläche des Körpers K auf die innere Oberfläche 11 des Substrats 1 auftreffen, und dort deren Energie zumindest zum Teil in akustische Energie des Substrates umgewandelt wird, indem dabei akustische Oberflächenwellen OW angeregt werden. Diese akustischen Oberflächenwellen OW treffen ebenso wie die unmittelbar durch den Sender S angeregten akustischen Oberflächenwellen OW auf die Empfänger E1 und E2, an denen durch den Empfang der akustischen Oberflächenwellen OW Signale erzeugt werden, über die Eigenschaften des zu messenden Körpers ermittelt werden, die die Beschaffenheit der Oberfläche des Substrats repräsentieren.

Um Eigenschaften des zu messenden Körpers K zu ermitteln, wird in dem in Figur 2A und 2B abgebildeten Ausführungsbeispiel die relative Position PS1, in der sich der Körper K in der Figur 2A befindet, in eine relative Position PS2, wie sie in der Figur 2B gezeigt ist, überführt. Insbesondere unterscheiden sich die beiden relativen Positionen dadurch, dass der minimale Abstand des Schwerpunktes SP, der in der Figur 2B mit D2 bezeichnet ist, gegenüber der in Figur 1A gezeigten Anordnung verringert ist.
Die Position des Körpers nach Änderung des Abstandes ist mit PS2 bezeichnet, ansonsten sind die Bezeichnungen in Figur 2B analog gewählt und auch die übrige Anordnung von Substrat, Sende-Empfänger-Einheiten und Medium bleibt unverändert.

Es wird bei dem Verfahren nach Verringerung dieses Abstandes von D1 auf D2, und damit einer Änderung der relativen Position von der relativen Position PS1 auf die relative Position PS2 des Körpers, eine erneute Anregung akustischer Oberflächenwellen auf dem Substrat 1 mittels des Senders S vorgenommen, wobei zumindest ein Teil der Energie der akustischen Oberflächenwellen OW in akustische Volumenwellen VW des Mediums umgewandelt wird und sich diese Volumenwellen im Medium sowie die akustischen Oberflächenwellen OW auf dem Substrat ausbreiten. Der zu messende Körper K steht dabei (analog zur Figur 2A) wiederum so mit dem Medium in Kontakt, dass zumindest ein Teil der sich im Medium ausbreitenden akustischen Volumenwellen VW mit der Oberfläche OW des Körpers wechselwirkt, wobei nachdem diese Wechselwirkung stattgefunden hat, die Volumenwellen wiederum, zumindest zum Teil, auf die innere Oberfläche 11 des Substrats 1 auftreffen und dort ein Teil der in ihnen gespeicherten akustischen Energie in akustische Energie des Substrats umgewandelt wird, indem dabei akustische Oberflächenwellen OW angeregt werden. Hierbei werden diese akustischen Oberflächenwellen OW zusammen mit den ursprünglich vom Sender S ausgesandten akustischen Oberflächenwellen OW jeweils an den Empfängern E1 und E2 empfangen werden, die zur Ermittlung der Eigenschaften des zu messenden Körpers herangezogen werden, die die Beschaffenheit der Oberfläche des Körpers repräsentieren. Hierbei wird berücksichtigt, dass bei der Durchführung des in Figur 2A gezeigten Verfahrensschrittes sowie bei der Durchführung des in Figur 2B gezeigten Verfahrensschrittes eine Änderung der relativen Position des Körpers stattgefunden hat, insbesondere dass der Schwerpunkt des Körpers um die (bekannte) Differenz der Abstände D2 und D1 verschoben worden ist.

Grafisch ist der unterschiedliche Ausbreitungsweg der akustischen Volumenwellen VW in Figur 2B relativ zu den Volumenwellen VW der Figur 2A dadurch gekennzeichnet, dass analog zur Figur 2A (bzw. der Figur 1A) der Ausbreitungsweg zweier exemplarischer Volumenwellen im Medium dargestellt ist, die sich entlang der durch Pfeile P41 und P42 bzw. P31 und P32 repräsentierten Pfade ausbreiten. Die Volumenwellen VW treffen dabei in Bereichen KS1 und KS1' auf die Oberfläche des Körpers, ebenso wie in der Figur 2A dargestellt und werden dort reflektiert. Allerdings ist aufgrund der größeren Nähe des Schwerpunktes des Körpers K zum Substrat 1 auch der Weg gegenüber dem in Figur 2A dargestellten Weg verkürzt, den diese Volumenwellen VW im Medium zurücklegen müssen, bis sie jeweils an den Stellen KS1 und KS1' mit dem Körper wechselwirken.

Es werden bei einer Ausführungsvariante die in Figur 1A bis 1C bzw. in Figur 2A und 2B gezeigten Verfahrensschritte auch in Kombination zur Messung der Beschaffenheit einer Oberfläche eines bestimmten Körpers K durchgeführt: Dabei werden durch die Zusammennahme der bei diesen Messungen jeweils erzeugten Signale, Eigenschaften des zu messenden Körpers zuverlässiger und/oder genauer ermittelt, die die Beschaffenheit der Oberfläche des Körpers repräsentieren. Insbesondere können im Fall der Figuren 1A bis 1C weitere Aufnahme von Signalen stattfinden, wobei jeweils andere der Sender-Empfänger-Einheiten SE als Sender S bzw. Empfänger E1, E2 fungieren. Hierbei wird zusätzlich zwischen den Aufnahmen von Signalen im durch die jeweilige Figur repräsentierten Verfahrensschritt die Position des Körpers K durch eine Abstandsänderung definiert verändert wird. Aus den Unterschieden bzw. Gemeinsamkeiten der so erzeugten Signale werden zuverlässig Eigenschaften des zu messenden Körpers ermittelt, die die Beschaffenheit der Oberfläche des Körpers repräsentieren.

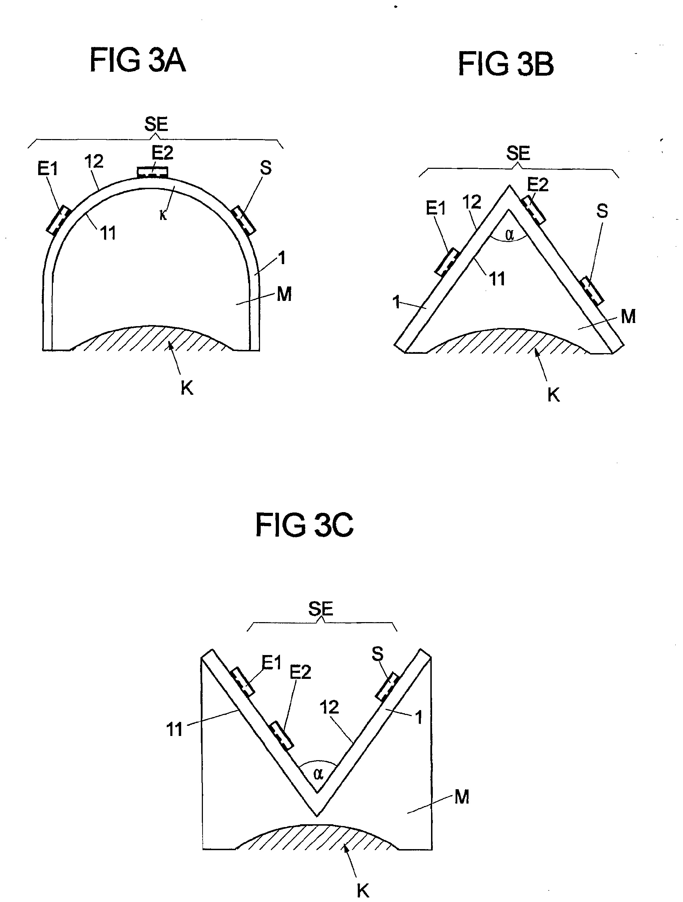

In den in den Figuren 3A bis 3C abgebildeten Schnittansichten sind alternative geometrische Ausgestaltungsformen des Substrats und der relativen Lage des Substrats zum Körper abgebildet. In Fig. 3A ist das Substrat im Wesentlichen u-förmig ausgebildet, in den Ausführungsbeispielen, die in den Figuren 3B und 3C abgebildet sind, ist das Substrat im Wesentlichen v-förmig ausgebildet. Das Substrat weist in jeder der Figuren 3A bis 3B eine einer homogenen Flüssigkeit, die ein Medium M darstellt, zugewandte innere Oberfläche 11 und eine dem Medium abgewandte äußere Oberfläche 12 auf.

Weiterhin ist in jeder der Abbildungen ein Teil eines Körpers K mit einer gekrümmten Oberfläche dargestellt, dessen Oberflächenbeschaffenheit zu messen ist. Der Körper K ist so auf der zur inneren Oberfläche 11 hingewandten Seite des Substrats angeordnet, dass die Oberfläche des Körpers K und die innere Oberfläche 11 des Substrats 1 einen Zwischenraum bilden, der mit dem Medium gefüllt ist.

In Fig. 3A ist das Substrat 1 so relativ zum Körper K angeordnet, dass das u-förmige Substrat mit der geöffneten Seite seiner U-Form und der entsprechenden inneren Oberfläche 11 zum Körper hingewandt angeordnet ist. Die Krümmung der inneren Oberfläche ist mit κ bezeichnet. Sie kann in alternativen Ausgestaltungen anders als abgebildet gewählt werden, insbesondere kann sie so bestimmt sein, dass die Krümmung der innere Oberfläche des Substrats so ist, dass diese innere Oberfläche des Substrats halbkreisförmig ausgebildet ist.

In Fig. 3B ist das Substrat 1 mit der geöffneten Seite seiner V-Form und der entsprechenden inneren Oberfläche 11 zum Körper hingewandt angeordnet. Der von den beiden die V-Form des Substrats bildenden Schenkeln in Figur 3B gebildete Winkel ist mit α bezeichnet.

In Fig. 3C ist das Substrat 1 mit der geschlossenen Seite seiner V-Form und der entsprechenden inneren Oberfläche 11 zum Körper hingewandt angeordnet. Der von den beiden die V-Form des Substrats bildenden Schenkeln in Figur 3B gebildete Winkel ist mit α' bezeichnet.

Auf der jeweils vom Körper K abgewandten Oberfläche 12 jedes der in den Figuren 3A bis 3B gezeigten Substrate sind drei schematisch dargestellt Sender-Empfänger-Einheiten SE abgebildet, die in vorliegenden Ausführungsbeispielen durch Interdigitalwandler gebildet sind. Diese Sender-Empfänger-Einheiten SE zeichnen sich dadurch aus, dass mittels ihrer sowohl eine Anregung (nicht abgebildeter) akustischer Oberflächenwellen auf dem Substrat 1 durch Einspeisung akustischer Wellenergie in das Substrat 1 erfolgen kann, als auch dass sie zum Empfang akustischer Oberflächenwellen des Substrats eingerichtet sind, wobei beim Empfang akustischer Oberflächenwellen des Substrats von ihnen ein entsprechendes Signal erzeugt wird. In dem Ausführungsbeispiel werden auf jedem der Substrate zwei Sender-Empfänger-Einheiten als Empfänger E1, E2 und eine Sender-Empfänger-Einheit als Sender S betrieben.

Der Ablauf eines Verfahrens zur Messung von Eigenschaften eines Körpers, die die Beschaffenheit der Oberfläche des Körpers repräsentieren, erfolgt mit den in den Figuren 3A bis 3C abgebildeten Vorrichtungen in analoger Weise wie mit dem in Zusammenhang mit den Figuren 1A bis 1C bzw. den Figuren 2A und 2B besprochenen Ablauf des Verfahrens. Der Unterschied liegt jeweils in der geometrischen Gestaltung des Substrats und der Anordnung des Substrats relativ zum Körper. Ansonsten gelten die in der Figurenbeschreibung zu den Figuren 1A bis 2B gemachten Ausführungen analog.

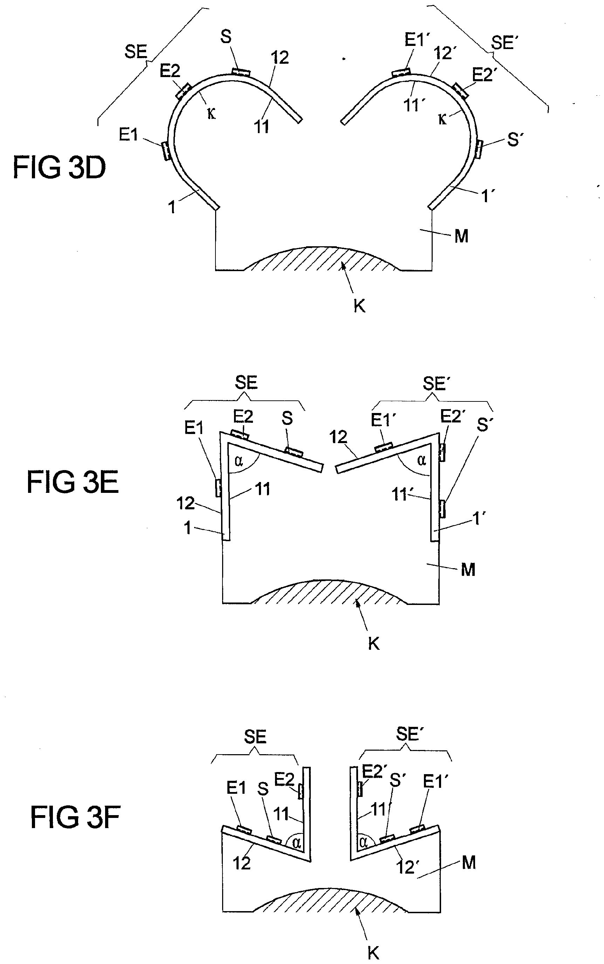

Die in den Figuren 3D bis 3F abgebildeten Vorrichtungen unterscheiden sich gegenüber den in den Figuren 3A bis 3C abgebildeten Vorrichtungen darin, dass jeweils zwei Substrate 1, 1', die nicht miteinander verbunden sind, und nicht nur ein Substrat bei der Durchführung des Verfahrens verwendet werden.

In Fig. 3D sind zwei Substrate, die im Wesentlichen u-förmig ausgebildet sind abgebildet, in den Ausführungsbeispielen, die in den Figuren 3E und 3F abgebildet sind, sind die jeweils abgebildeten zwei Substrate im Wesentlichen jeweils v-förmig.

Die Substrate weisen in jeder der Figuren 3A bis 3B eine einer homogenen Flüssigkeit, die ein Medium M darstellt, zugewandte innere Oberfläche 11 und eine dem Medium abgewandte äußere Oberfläche 12 auf.

Weiterhin ist in jeder der Abbildungen ein Teil eines Körpers K mit einer gekrümmten Oberfläche dargestellt, dessen Oberflächenbeschaffenheit zu messen ist. Der Körper K ist so auf der zur inneren Oberfläche 11,11' hingewandten Seite der Substrate 1, 1' angeordnet, dass die Oberfläche des Körpers K und die innere Oberfläche 11,11' der Substrate 1,1' einen Zwischenraum bilden, der mit dem Medium gefüllt ist.

In Fig. 3D sind die Substrate 1,1' so relativ zum Körper K angeordnet, dass die u-förmigen Substrate mit jeweils ihrer geöffneten Seite ihrer U-Form und den entsprechenden inneren Oberflächen 11,11' zum Körper hingewandt angeordnet sind. Die Krümmung der inneren Oberfläche ist mit κ und κ' bezeichnet. Man beachte, dass in einer alternativen (nicht abgebildeten) Ausgestaltungsform die Krümmung der inneren Oberfläche jedes der Substrate 11,11' unabhängig voneinander auch so gewählt sein kann, dass wenigstens eines der Substrate halbkreisförmig ausgebildet ist.

In Fig. 3E sind die Substrate mit den geöffneten Seiten ihrer V-Form und den entsprechenden inneren Oberflächen 11,11' zum Körper K hingewandt angeordnet. Der von den jeweils zwei die V-Form jedes Substrats bildenden Schenkeln in Figur 3E gebildete Winkel ist mit α bzw. α' bezeichnet.

In Fig. 3F sind die Substrate mit den geschlossenen Seiten ihrer V-Form und den entsprechenden inneren Oberflächen 11,11' zum Körper K hingewandt angeordnet. Der von den jeweils zwei die V-Form jedes Substrats bildenden Schenkeln in Figur 3E gebildete Winkel ist mit α bzw. α' bezeichnet.

Auf der jeweils vom Körper K abgewandten Oberfläche 12 jeder der in den Figuren 3D bis 3F abgebildeten Substrate sind drei schematisch dargestellte Sender-Empfänger-Einheiten SE abgebildet, die in vorliegenden Ausführungsbeispielen durch Interdigitalwandler gebildet sind. Diese Sender-Empfänger-Einheiten SE zeichnen sich dadurch aus, dass mittels ihrer sowohl eine Anregung (nicht abgebildeter) akustischer Oberflächenwellen auf dem jeweiligen Substrat 1,1', auf dem sie angeordnet sind, durch Einspeisung akustischer Wellenergie in das Substrat 1 erfolgen kann, als auch dass sie zum Empfang akustischer Oberflächenwellen des jeweiligen Substrats 1,1' eingerichtet sind, wobei beim Empfang akustischer Oberflächenwellen des Substrats 1, 1' von ihnen ein entsprechendes Signal erzeugt wird.

Bei der Durchführung des Verfahrens mittels einer der in Abbildung 3D bis 3F gezeigten Vorrichtungen werden wenigstens auf einem der beiden jeweils abgebildeten Substrate 1,1' (nicht abgebildete) akustische Oberflächenwellen mittels eines Senders S, S' angeregt. (Nicht abgebildete) akustische Volumenwellen werden im Anschluss durch Umwandlung zumindest eines Teils der Energie der so angeregten akustischen Oberflächenwellen angeregt. Dabei breiten sich akustische Oberflächenwellen auf dem Substrat, auf dem sie mittels des Senders S, S' angeregt wurden, aus. Darüber hinaus breiten sich die Volumenwellen im Medium M aus, wobei zumindest ein Teil der sich im Medium M ausbreitenden Volumenwellen mit der Oberfläche des Körpers K wechselwirkt. Zumindest ein Teil der Volumenwellen trifft nach der Wechselwirkung in den abgebildeten Ausführungsbeispielen auf die Oberfläche wenigsten eines der beiden jeweils abgebildeten Substrate 1,1' auf. Auf dem Substrat 1,1', auf dem die Volumenwelle auftrifft, erzeugt diese akustische Oberflächenwellen durch Umwandlung wenigstens eines Teils der Energie der akustischen Volumenwelle in akustische Energie des Substrats 1,1'.

Auf wenigstens einem der Substrate 1,1', auf dem die Oberflächenwellen durch Umwandlung zumindest eines Teils dieser Energie angeregt wurden, werden akustische Oberflächenwellen empfangen.

Aus bei dem Empfang der akustischen Oberflächenwellen an dem Empfänger E1, E2 bzw. den Empfängern E1, E2 erzeugten Signalen werden Eigenschaften des zu messenden Körpers, die die Beschaffenheit der Oberfläche des Körpers K repräsentieren, ermittelt. Bei der Ermittelung von Eigenschaften dieser Eigenschaften des zu messenden Körpers werden Informationen über die geometrische Anordnung, insbesondere den Abstand der Substrate 1,1' zueinander und ihre geometrische Form (insbesondere Informationen über die U- oder V-Form) mit herangezogen.

## Patentansprüche

1. Verfahren zur Messung der Beschaffenheit einer Oberfläche eines Körpers (K), das die folgenden Schritte umfasst:
a. Bereitstellen eines Substrats (1,1') mit einer einem Medium (M) zugewandten inneren Oberfläche (11,11'),
b. Anregen akustischer Oberflächenwellen (OW) auf dem Substrat (1,1') durch Einspeisung akustischer Wellenenergie in das Substrat (1,1') mittels eines Senders oder mittels mehrerer Sender (S),
c. Anregen akustischer Volumenwellen (VW) im Medium (M) durch Umwandlung zumindest eines Teils der Energie der akustischen Oberflächenwellen (OW) in Energie der akustischen Volumenwellen (VW),
d. Ausbreitung sowohl der akustischen Oberflächenwellen (OW) auf dem Substrat (1,1') als auch der akustischen Volumenwellen im Medium (M), wobei ein zu messender Körper (K) so mit dem Medium (M) in Kontakt steht, dass zumindest ein Teil der sich im Medium (M) ausbreitenden akustischen Volumenwellen (VW) mit der Oberfläche des Körpers wechselwirkt,
e. Anregen akustischer Oberflächenwellen (OW) auf dem Substrat (1,1') durch Umwandlung zumindest eines Teils der Energie der akustischen Volumenwellen (VW) in akustische Energie des Substrats (1,1');
f. Empfangen der akustischen Oberflächenwellen (OW) mit einem hierzu eingerichteten Empfänger (E1, E2);
g. Ermitteln von Eigenschaften des zu messenden Körpers (K), die die Beschaffenheit der Oberfläche des Körpers (K) repräsentieren, aus beim Empfang der akustischen Oberflächenwellen (OW) erzeugten Signalen,
**dadurch gekennzeichnet, dass**
der Abstand (D1, D2) zwischen der dem Medium (M) zugewandten inneren Oberfläche (11, 11') des Substrats (1, 1') und dem Schwerpunkt (SP) des Körpers (K) geändert wird, wobei aus Unterschieden oder Gemeinsamkeiten der so erzeugten Signale Eigenschaften des Körpers (K) ermittelt werden.

2. Verfahren nach Anspruch 1, **dadurch gekennzeichnet, dass** die Wechselwirkung des Körpers (K) mit den sich im Medium (M) ausbreitenden akustischen Volumenwellen (VW) wenigstens einen der folgenden Vorgänge umfasst:
- eine zumindest teilweisen Reflexion der Volumenwellen (VW) an der Oberfläche des Körpers (K),
- eine Absorption von akustischer Energie der Volumenwelle (VW) durch den Körper (K),
- einer Umwandlung zumindest eines Teils der Energie der akustischen Volumenwelle (VW) in akustische Energie des Körpers (K), wobei bei dieser Umwandlung wenigstens eine akustische Oberflächenwelle (OW) auf der Oberfläche des Körpers (K) angeregt wird.

3. Verfahren nach Anspruch 2, **dadurch gekennzeichnet, dass** eine oder mehrere sich im Medium (M) ausbreitende akustische Volumenwellen (VW), an mehreren zueinander beabstandeten Bereichen (KS1, KS2) der Oberfläche des Körpers (K) entlang ihres Ausbreitungsweges (P31, P32, P33, P34) durch das Medium (M) mit der Oberfläche des Körpers (K) während unterschiedlicher Zeitspannen wechselwirkt.

4. Verfahren nach einem der vorhergehenden Ansprüche, **dadurch gekennzeichnet, dass** der Körper (K) relativ zum Substrat (1,1') angeordnet wird, so dass die Oberfläche des Körper (K) und die innere Oberfläche (11) des Substrats (1,1') einen Zwischenraum bilden, der zumindest teilweise mit dem Medium (M) gefüllt ist.

5. Verfahren nach einem der vorhergehenden Ansprüche, **dadurch gekennzeichnet, dass** mehrfache, zeitlich beabstandete Anregungen von Oberflächenwellen (OW) mittels des Senders (S) erfolgen, wobei die relative Position (PS1, PS2) des Körpers (K) zum Substrat (1,1') zwischen den Anregungen definiert verändert wird.

6. Verfahren nach einem der vorhergehenden Ansprüche, **dadurch gekennzeichnet, dass** die zeitliche Verzögerung durch die Ausbreitung der Wellenpulse zwischen wenigstens einem Sender (S) und wenigstens einem Empfänger (E1, E2) gemessen wird und/oder dass Eigenschaften der Form der am Empfänger (E1, E2) eintreffenden Wellenpulse gemessen werden, um die Beschaffenheit der Oberfläche des Körpers zu messen, wobei die Verzögerung durch die Ausbreitung der Wellenpulsen zwischen wenigstens einem Sender (S) und wenigstens einem Empfänger (E1, E2) und/oder Eigenschaften der Form der am Empfänger (E1, E2) eintreffenden Wellenpulse für Wellen gemessen wird, die sich entlang unterschiedlicher Pfade (P1, P2, P31, P32, P33, P34, P41, P42) durch das Medium (M) zum Empfänger (E1, E2) ausgebreitet haben, um die Beschaffenheit der Oberfläche des Körpers (K) zu messen.

7. Verfahren nach einem der vorhergehenden Ansprüche, **dadurch gekennzeichnet, dass** mehrere, zeitlich beabstandete Anregungen akustischer Oberflächenwellen (OW) mittels des Senders (S) erfolgen, wobei zwischen mindestens zwei der Anregungen die Eigenschaften des Mediums (M) definiert verändert werden, oder dass während der Anregung akustischer Oberflächenwellen (OW) mittels des Sender (S) oder mittels mehrerer Sender (S) die Eigenschaften des Mediums (M) definiert verändert werden.

8. Verfahren nach Anspruch 7, **dadurch gekennzeichnet, dass** die Veränderung der Eigenschaften des Mediums (M) in einem zumindest teilweisen Austausch des Mediums (M) durch ein anderes Medium (M2) besteht und/ oder in einer Änderung eines physikalischen Parameters des Mediums (M) besteht, wobei wenigstens einer der geänderten physikalische Parameters des Mediums (M) die lokale Temperaturverteilung im Medium (M) oder die im Medium (M) lokal herrschende Druckverteilung ist.

9. Verfahren nach einem der vorangehenden Ansprüche, **dadurch gekennzeichnet, dass** zur Messung der Beschaffenheit der Oberfläche des Körpers (K) ein Abstand zwischen dem Substrat (1,1') und einem Teilbereich der Oberfläche des Körpers (K) ermittelt wird oder Abstände zwischen dem Substrat (1,1') und mehreren zueinander beabstandeten Teilbereichen der Oberfläche des Körpers (K) ermittelt werden.

10. Verfahren nach Anspruch 9, **dadurch gekennzeichnet, dass** mehrere Sender-Empfänger-Einheiten (SE) voneinander beabstandet auf dem Substrat (1,1') angeordnet sind und zur Messung der Beschaffenheit einer Oberfläche des Körpers (K) im zeitlichen Wechsel jeweils eine oder mehrere der Sender-Empfänger-Einheiten (SE) als Sender (S) Oberflächenwellen (OW) anregen, wobei nach Anregung dieser Oberflächenwellen eine oder mehrere der anderen Sender-Empfänger-Einheiten (SE) Oberflächenwellen (OW) empfangen und dabei als Empfänger (E1, E2) jeweils ein Signal erzeugen und aus einem oder mehreren dieser Signale die Beschaffenheit der Oberfläche des Körpers (K) ermittelt werden.

11. Verfahren nach einem der vorhergehenden Ansprüche, **dadurch gekennzeichnet, dass** mehrfache, zeitlich beabstandete Anregungen mittels des Senders (S) erfolgen, wobei zwischen wenigstens zwei dieser Anregungen eine Bearbeitung des Körpers (K) derart erfolgt, dass die Beschaffenheit einer Oberfläche des Körpers (K) geändert wird, wobei die Beschaffenheit einer Oberfläche des Körpers (K) vor und nach der Bearbeitung des Körpers (K) gemessen wird, oder dass während der Anregung akustischer Oberflächenwellen (OW) mittels des Sender (S) oder mittels mehrerer Sender (S) eine Bearbeitung des Körpers (K) derart erfolgt, dass die Beschaffenheit einer Oberfläche des Körpers (K) geändert wird, wobei die Beschaffenheit einer Oberfläche des Körpers (K) während der Bearbeitung des Körpers (K) gemessen wird.

12. Verfahren nach Anspruch 11, **dadurch gekennzeichnet, dass** die Bearbeitung des Körpers (K) in Abhängigkeit davon gesteuert wird, welche Beschaffenheit der Oberfläche des Körpers (K) vor oder bei der Bearbeitung gemessen wurden.

13. Verfahren nach Anspruch 11 oder 12, **dadurch gekennzeichnet, dass** die Bearbeitung zumindest in einem Abtragen von Material vom Körper (K) besteht oder zumindest in einer Anreicherung des Körpers (K) mit Material besteht.

14. Verfahren nach einem der vorhergehenden Ansprüche, **dadurch gekennzeichnet, dass** zur Bestimmung der Beschaffenheit einer Oberfläche eines Körper (K) zusätzlich eine Referenzmessung vorgenommen wird, bei der der Körper (K) nicht in Kontakt mit dem Medium (M) ist.

15. Vorrichtung zur Messung der Beschaffenheit einer Oberfläche eines Körpers (K), die Folgendes umfasst:
- mindestens ein Substrat (1,1') mit einer einem Medium (M) zugewandten inneren Oberfläche (11),
- mindestens einen Sender (S) zum Anregen akustischer Oberflächenwellen (OW) auf dem Substrat durch Einspeisung akustischer Wellenergie in das Substrat (1,1'), derart, dass
- in dem Medium (M) akustische Volumenwellen (VW) durch Umwandlung zumindest eines Teils der Energie der akustischen Oberflächenwellen (OW) in Energie akustischer Volumenwellen (VW) des Mediums angeregt werden, und
- zumindest ein Teil der sich im Medium (M) ausbreitenden akustischen Volumenwellen (VW) mit der Oberfläche eines zumindest teilweise im Medium (M) befindlichen Körpers (K) wechselwirkt, sowie
- einen zur Erzeugung von Signalen beim Empfang akustischer Oberflächenwellen (OW) eingerichteten Empfänger (E1, E2) sowie
- ein Auswertmittel zur Ermittelung von Eigenschaften des zu messenden Körpers (K), die die Beschaffenheit der Oberfläche des Körpers (K) repräsentieren, aus beim Empfang der akustischen Oberflächenwellen am Empfänger (E1, E2) erzeugten Signalen,
**dadurch gekennzeichnet, dass**
das Auswertmittel ausgebildet ist, aus Unterschieden oder Gemeinsamkeiten von Signalen, die bei einer Änderung eines Abstandes (D1, D2) zwischen der dem Medium (M) zugewandten inneren Oberfläche (11,11') des Substrats (1,1') und dem Schwerpunkt (SP) des Körpers (K) erzeugt werden, Eigenschaften des Körpers (K) zu ermitteln.

## Claims

1. A method for measuring the condition of a surface of a body (K), which comprises the following steps:
a. providing a substrate (1, 1') with an inner surface (11, 11') facing a medium (M),
b. exciting surface acoustic waves (OW) on the substrate (1, 1') by feeding acoustic wave energy into the substrate (1, 1') by means of a transmitter or by means of a plurality of transmitters (S),
c. exciting volume acoustic waves (VW) in the medium (M) by converting at least a part of the energy of the surface acoustic waves (OW) into energy of the volume acoustic waves (VW),
d. propagating both the surface acoustic waves (OW) on the substrate (1, 1') and the volume acoustic waves in the medium (M), wherein a body (K) to be measured is in contact with the medium (M) such that at least a part of the volume acoustic waves (VW) propagating in the medium (M) interacts with the surface of the body,
e. exciting surface acoustic waves (OW) on the substrate (1, 1') by converting at least a part of the energy of the volume acoustic waves (VW) into acoustic energy of the substrate (1, 1');
f. receiving the surface acoustic waves (OW) by means of a receiver (E1, E2) equipped for this purpose;
g. determining properties of the body (K) to be measured, which represent the condition of the surface of the body (K), from signals generated on receipt of the surface acoustic waves (OW),
**characterized in that**
the distance (D1, D2) between the inner surface (11, 11') of the substrate (1, 1') facing the medium (M) and the center of gravity (SP) of the body (K) is changed, wherein properties of the body (K) are determined from differences or similarities of the signals thus generated.

2. The method according to claim 1, **characterized in that** the interaction of the body (K) with the volume acoustic waves (VW) propagating in the medium (M) comprises at least one of the following operations:
- an at least partial reflection of the volume waves (VW) on the surface of the body (K),
- an absorption of acoustic energy of the volume wave (VW) by the body (K),
- a conversion of at least a part of the energy of the volume acoustic wave (VW) into acoustic energy of the body (K), wherein in this conversion at least one surface acoustic wave (OW) is excited on the surface of the body (K).

3. The method according to claim 2, **characterized in that** one or more volume acoustic waves (VW) propagating in the medium (M) interact with the surface of the body (K) during different time intervals on a plurality of mutually spaced areas (KS1, KS2) of the surface of the body (K) along their propagation path (P31, P32, P33, P34) through the medium (M).

4. The method according to any of the preceding claims, **characterized in that** the body (K) is arranged relative to the substrate (1, 1') such that the surface of the body (K) and the inner surface (11) of the substrate (1, 1') form a gap which is at least partly filled with the medium (M).

5. The method according to any of the preceding claims, **characterized in that** repeated, temporally spaced excitations of surface waves (OW) are effected by means of the transmitter (S), wherein the relative position (PS1, PS2) of the body (K) to the substrate (1, 1') is changed in a defined way between the excitations.

6. The method according to any of the preceding claims, **characterized in that** the time delay due to the propagation of the wave pulses between at least one transmitter (S) and at least one receiver (E1, E2) is measured and/or that properties of the shape of the wave pulses arriving at the receiver (E1, E2) are measured in order to measure the condition of the surface of the body, wherein the delay due to the propagation of the wave pulses between at least one transmitter (S) and at least one receiver (E1, E2) is measured and/or properties of the shape of the wave pulses arriving at the receiver (E1, E2) are measured for waves which have propagated along different paths (P1, P2, P31, P32, P33, P34, P41, P42) through the medium (M) to the receiver (E1, E2) in order to measure the condition of the surface of the body (K).

7. The method according to any of the preceding claims, **characterized in that** a plurality of temporally spaced excitations of surface acoustic waves (OW) are effected by means of the transmitter (S), wherein between at least two of the excitations the properties of the medium (M) are changed in a defined way, or that during the excitation of surface acoustic waves (OW) by means of the transmitter (S) or by means of a plurality of transmitters (S) the properties of the medium (M) are changed in a defined way.

8. The method according to claim 7, **characterized in that** the change of the properties of the medium (M) consists in an at least partial replacement of the medium (M) by another medium (M2) and/or in a change of a physical parameter of the medium (M), wherein at least one of the changed physical parameters of the medium (M) is the local temperature distribution in the medium (M) or the locally existing pressure distribution in the medium (M).

9. The method according to any of the preceding claims, **characterized in that** for measuring the condition of the surface of the body (K) a distance between the substrate (1, 1') and a partial area of the surface of the body (K) is determined or distances between the substrate (1, 1') and a plurality of mutually spaced partial areas of the surface of the body (K) are determined.

10. The method according to claim 9, **characterized in that** a plurality of transmitter-receiver units (SE) are arranged on the substrate (1, 1') at a distance from each other and for measuring the condition of a surface of the body (K) one or more of the transmitter-receiver units (SE) as transmitter (S) each excite surface waves (OW) in temporal alternation, wherein after excitation of these surface waves (OW) one or more of the other transmitter-receiver units (SE) receive surface waves (OW) and as receiver (E1, E2) thereby each generate a signal, and from one or more of these signals the condition of the surface of the body (K) is determined.

11. The method according to any of the preceding claims, **characterized in that** repeated, temporally spaced excitations are effected by means of the transmitter (S), wherein between at least two of these excitations a machining of the body (K) is effected such that the condition of a surface of the body (K) is changed, wherein the condition of a surface of the body (K) is measured before and after the machining of the body (K), or that during the excitation of surface acoustic waves (OW) by means of the transmitter (S) or by means of a plurality of transmitters (S) a machining of the body (K) is effected such that the condition of a surface of the body (K) is changed, wherein the condition of a surface of the body (K) is measured during the machining of the body (K).

12. The method according to claim 11, **characterized in that** the machining of the body (K) is controlled in dependence on what condition of the surface of the body (K) has been measured before or during the machining.

13. The method according to claim 11 or 12, **characterized in that** the machining consists at least in a removal of material from the body (K) or at least in an enrichment of the body (K) with material.

14. The method according to any of the preceding claims, **characterized in that** for determining the condition of a surface of a body (K) a reference measurement additionally is performed, in which the body (K) is not in contact with the medium (M).

15. An apparatus for measuring the condition of a surface of a body (K), comprising:
- at least one substrate (1, 1') with an inner surface (11) facing a medium (M),
- at least one transmitter (S) for exciting surface acoustic waves (OW) on the substrate by feeding acoustic wave energy into the substrate (1, 1') such that
- volume acoustic waves (VW) are excited in the medium (M) by converting at least a part of the energy of the surface acoustic waves (OW) into energy of volume acoustic waves (VW) of the medium, and
- at least a part of the volume acoustic waves (VW) propagating in the medium (M) interacts with the surface of a body (K) at least partly present in the medium (M), and
- a receiver (E1, E2) equipped for generating signals on receipt of surface acoustic waves (OW), and
- an evaluating means for determining properties of the body (K) to be measured, which represent the condition of the surface of the body (K), from signals generated on receipt of the surface acoustic waves at the receiver (E1, E),
**characterized in that**
the evaluating means is configured to determine properties of the body (K) from differences or similarities of signals which are generated when changing a distance (D1, D2) between the inner surface (11, 11') of the substrate (1, 1') facing the medium (M) and the center of gravity (SP) of the body (K).

## Revendications

1. Procédé de mesure de la nature d'une surface d'un corps (K), qui comprend les étapes suivantes :
a. la fourniture d'un substrat (1, 1') avec une surface intérieure (11, 11') tournée vers un milieu (M),
b. l'excitation d'ondes acoustiques de surface (OW) sur le substrat (1, 1') par injection d'énergie d'ondes acoustiques dans le substrat (1, 1') au moyen d'un émetteur ou au moyen de plusieurs émetteurs (S),
c. l'excitation d'ondes acoustiques de volume (VW) dans le milieu (M) par conversion d'au moins une partie de l'énergie des ondes acoustiques de surface (OW) en énergie des ondes acoustiques de volume (VW),
d. la propagation aussi bien des ondes acoustiques de surface (OW) sur le substrat (1, 1') que des ondes acoustiques de volume dans le milieu (M), dans lequel un corps (K) à mesurer est en contact avec le milieu (M) de telle manière qu'au moins une partie des ondes acoustiques de volume (VW) se propageant dans le milieu (M) est en interaction avec la surface du corps,
e. l'excitation d'ondes acoustiques de surface (OW) sur le substrat (1, 1') par conversion d'au moins une partie de l'énergie des ondes acoustiques de volume (VW) en énergie acoustique du substrat (1, 1') ;
f. la réception des ondes acoustiques de surface (OW) avec un récepteur (E1, E2) conçu à cet effet ;
g. la détermination de propriétés du corps (K) à mesurer, qui représentent la nature de la surface du corps (K), à partir de signaux générés lors de la réception des ondes acoustiques de surface (OW),
**caractérisé en ce que**
l'écart (D1, D2) entre la surface intérieure (11, 11') du substrat (1, 1') tournée vers le milieu (M) et le centre de gravité (SP) du corps (K) est modifié, dans lequel des propriétés du corps (K) sont déterminées à partir de différences ou de points communs des signaux ainsi générés.

2. Procédé selon la revendication 1, **caractérisé en ce que** l'interaction du corps (K) avec les ondes acoustiques de volume (VW) se propageant dans le milieu (M) comprend au moins un des processus suivants :
- une réflexion au moins partielle des ondes de volume (VW) sur la surface du corps (K),
- une absorption d'énergie acoustique de l'onde de volume (VW) par le corps (K),
- une conversion d'au moins une partie de l'énergie de l'onde acoustique de volume (VW) en énergie acoustique du corps (K), dans laquelle, lors de cette conversion, au moins une onde acoustique de surface (OW) est excitée sur la surface du corps (K).

3. Procédé selon la revendication 2, **caractérisé en ce qu'**une ou plusieurs ondes acoustiques de volume (VW) se propageant dans le milieu (M) sont en interaction avec la surface du corps (K) pendant différents laps de temps sur plusieurs zones (KS1, KS2), espacées les unes des autres, de la surface du corps (K) le long de leur trajet de propagation (P31, P32, P33, P34) à travers le milieu (M).

4. Procédé selon l'une quelconque des revendications précédentes, **caractérisé en ce que** le corps (K) est agencé par rapport au substrat (1, 1') de sorte que la surface du corps (K) et la surface intérieure (11) du substrat (1, 1') forment un espace intermédiaire, qui est rempli au moins en partie du milieu (M).

5. Procédé selon l'une quelconque des revendications précédentes, **caractérisé en ce que** des excitations répétées espacées dans le temps d'ondes de surface (OW) s'effectuent au moyen de l'émetteur (S), dans lequel la position relative (PS1, PS2) du corps (K) par rapport au substrat (1, 1') entre les excitations est modifiée de façon définie.

6. Procédé selon l'une quelconque des revendications précédentes, **caractérisé en ce que** le retard temporel est mesuré par la propagation des impulsions d'onde entre au moins un émetteur (S) et au moins un récepteur (E1, E2) et/ou que des propriétés de la forme des impulsions d'onde arrivant sur le récepteur (E1, E2) sont mesurées, afin de mesurer la nature de la surface du corps, dans lequel le retard est mesuré par la propagation des impulsions d'onde entre au moins un émetteur (S) et au moins un récepteur (E1, E2) et/ou des propriétés de la forme des impulsions d'onde arrivant sur le récepteur (E1, E2) pour des ondes qui se sont propagées le long de différents chemins (P1, P2, P31, P32, P33, P34, P41, P42) à travers le milieu (M) en direction du récepteur (E1, E2), afin de mesurer la nature de la surface du corps (K).

7. Procédé selon l'une quelconque des revendications précédentes, **caractérisé en ce que** plusieurs excitations espacées dans le temps d'ondes acoustiques de surface (OW) s'effectuent au moyen de l'émetteur (S), dans lequel les propriétés du milieu (M) sont modifiées de manière définie entre au moins deux des excitations, ou que les propriétés du milieu (M) sont modifiées de manière définie pendant l'excitation d'ondes acoustiques de surface (OW) au moyen de l'émetteur (S) ou au moyen de plusieurs émetteurs (S).

8. Procédé selon la revendication 7, **caractérisé en ce que** la modification des propriétés du milieu (M) consiste en un échange au moins partiel du milieu (M) par un autre milieu (M2) et/ou en une modification d'un paramètre physique du milieu (M), dans lequel au moins un des paramètres physiques modifiés du milieu (M) est la répartition locale des températures dans le milieu (M) ou la répartition des pressions régnant localement dans le milieu (M).

9. Procédé selon l'une quelconque des revendications précédentes, **caractérisé en ce que**, pour mesurer la nature de la surface du corps (K), un écart entre le substrat (1, 1') et une zone partielle de la surface du corps (K) est déterminé ou des écarts entre le substrat (1, 1') et plusieurs zones partielles, espacées les unes des autres, de la surface du corps (K) sont déterminés.

10. Procédé selon la revendication 9, **caractérisé en ce que** plusieurs unités émettrices-réceptrices (SE) sont agencées sur le substrat (1, 1') de manière espacée les unes des autres et, pour mesurer la nature d'une surface du corps (K), respectivement une ou plusieurs des unités émettrices-réceptrices (SE) en tant qu'émetteurs (S) excitent des ondes de surface (OW) alternativement dans le temps, dans lequel après l'excitation de ces ondes de surface, une ou plusieurs des autres unités émettrices-réceptrices (SE) reçoivent des ondes de surface (OW) et génèrent à cette occasion en tant que récepteurs (E1, E2) respectivement un signal et la nature de la surface du corps (K) est déterminée à partir d'un ou de plusieurs de ces signaux.

11. Procédé selon l'une quelconque des revendications précédentes, **caractérisé en ce que** des excitations répétées espacées dans le temps s'effectuent au moyen de l'émetteur (S), dans lequel un usinage du corps (K) s'effectue entre au moins deux de ces excitations, de telle sorte que la nature d'une surface du corps (K) est modifiée, dans lequel la nature d'une surface du corps (K) est mesurée avant et après l'usinage du corps (K), ou qu'un usinage du corps (K) s'effectue pendant l'excitation d'ondes acoustiques de surface (OW) au moyen de l'émetteur (S) ou au moyen de plusieurs émetteurs (S), de telle sorte que la nature d'une surface du corps (K) est modifiée, dans lequel la nature d'une surface du corps (K) est mesurée pendant l'usinage du corps (K).

12. Procédé selon la revendication 11, **caractérisé en ce que** l'usinage du corps (K) est commandé en fonction de la nature de la surface du corps (K) ayant été mesurée avant l'usinage ou lors de celui-ci.

13. Procédé selon la revendication 11 ou 12, **caractérisé en ce que** l'usinage consiste au moins en un enlèvement de matériau du corps (K) ou au moins en un enrichissement du corps (K) en matériau.

14. Procédé selon l'une quelconque des revendications précédentes, **caractérisé en ce que**, pour définir la nature d'une surface d'un corps (K), une mesure de référence est réalisée en plus, lors de laquelle le corps (K) n'est pas en contact avec le milieu (M).

15. Dispositif de mesure de la nature d'une surface d'un corps (K), qui comprend ce qui suit :
- au moins un substrat (1, 1') avec une surface intérieure (11) tournée vers un milieu (M),
- au moins un émetteur (S) destiné à exciter des ondes acoustiques de surface (OW) sur le substrat par injection d'énergie d'ondes acoustiques dans le substrat (1, 1'), de telle sorte que
- dans le milieu (M), des ondes acoustiques de volume (VW) sont excitées par conversion d'au moins une partie de l'énergie des ondes acoustiques de surface (OW) en énergie d'ondes acoustiques de volume (VW) du milieu, et
- au moins une partie des ondes acoustiques de volume (VW) se propageant dans le milieu (M) est en interaction avec la surface d'un corps (K) se trouvant au moins en partie dans le milieu (M), ainsi que
- un récepteur (E1, E2) conçu pour générer des signaux lors de la réception d'ondes acoustiques de surface (OW), ainsi que
- un moyen d'évaluation destiné à déterminer des propriétés du corps (K) à mesurer, qui représentent la nature de la surface du corps (K), à partir de signaux générés lors de la réception des ondes acoustiques de surface sur le récepteur (E1, E2),
**caractérisé en ce que**
le moyen d'évaluation est conçu pour déterminer des propriétés du corps (K) à partir de différences ou de points communs de signaux qui sont générés lors d'une modification d'un écart (D1, D2) entre la surface intérieure (11, 11'), tournée vers le milieu (M), du substrat (1, 1') et le centre de gravité (SP) du corps (K).
